# EUROPEAN PATENT APPLICATION

(11) **EP 4 585 983 A1**
(43) Date of publication of application: **16.07.2025**
(21) Application number: 23861989.4
(22) Date of filing: 27.06.2023
(51) Int. Cl.: G02B 6/293, H04J 14/02

(54) **BIDIRECTIONAL OPTICAL SUB-ASSEMBLY AND OPTICAL MODULE**

(30) Priority: 09.09.2022 CN 202211105439; 09.12.2022 CN 202211586729
(71) Applicant: Huawei Technologies Co., Ltd., Shenzhen, Guangdong 518129 (CN)
(72) Inventor: LI, Shu, Shenzhen, Guangdong 518129 (CN); LI, Yuanmou, Shenzhen, Guangdong 518129 (CN); LIN, Huafeng, Shenzhen, Guangdong 518129 (CN)
(74) Representative: Maiwald GmbH
(86) International application number: PCT/CN2023/102666
(87) International publication number: WO 2024/051288

(57) **Abstract**

A bidirectional optical sub-assembly (50) and an optical module are provided, including an optical fiber, configured to transmit a first optical signal to a first filter (53) in a cavity; the first filter (53), configured to reflect the first optical signal to a first inclined face (f1) of a glass crystal (52); the glass crystal (52), configured to transmit the first optical signal to a second inclined face (f2); a second filter (54), configured to transparently transmit a second optical signal that is in a first wavelength range and that is in the first optical signal to a first receiving optical sub-assembly (ROSA 1), where the second filter (54) is further configured to reflect a third optical signal that is in a second wavelength range and that is in the first optical signal to the first inclined face (f1); a second receiving optical sub-assembly (ROSA 2), configured to receive the third optical signal output by the first inclined face (f1); and a transmitting optical sub-assembly (TOSA), configured to transmit a fourth optical signal to the first filter (53) in the cavity, where the first filter (53) is further configured to transparently transmit the fourth optical signal to the optical fiber. The bidirectional optical sub-assembly (50) can receive a plurality of optical signals with different wavelengths, and has a simple structure and high receiving accuracy.

## Description

This application claims priorities to Chinese Patent Application No. 202211105439.1, filed with the China National Intellectual Property Administration on September 9, 2022 and entitled "BIDIRECTIONAL OPTICAL SUB-ASSEMBLY AND OPTICAL MODULE", and to Chinese Patent Application No. 202211586729.2, filed with the China National Intellectual Property Administration on December 9, 2022 and entitled "BIDIRECTIONAL OPTICAL SUB-ASSEMBLY AND OPTICAL MODULE", both of which are incorporated herein by reference in their entireties.

### TECHNICAL FIELD

This application relates to the field of optical communication technologies, and in particular, to a bidirectional optical sub-assembly and an optical module.

### BACKGROUND

An optical fiber communication system is a current mainstream communication system, in which fiber to the x (FTTx) is an access mode of an access network (access network, AN). Commonly, an optical fiber passive optical network (passive optical network, PON) can implement fiber to the x. The PON includes an optical line terminal (optical line terminal, OLT) disposed at a central control station, an optical network unit (optical network unit, ONU) or an optical network terminal (optical network terminal, ONT) disposed on a user side, and the like. Each of the ONU (or the ONT) and the OLT includes a bidirectional optical sub-assembly (bidirectional optical sub-assembly, BOSA). The bidirectional optical sub-assembly in the ONU (or the ONT) is configured to receive an optical signal transmitted by the OLT to the user side, and send, to the OLT, an optical signal generated by the ONU (or the ONT). The bidirectional optical sub-assembly in the OLT is configured to receive an optical signal transmitted by the ONU (or the ONT) to the central control station, and send, to the ONU (or the ONT), an optical signal generated by the central control station.

Different ONUs (or ONTs) may send optical signals with different wavelengths to the OLT. In this case, the bidirectional optical sub-assembly in the OLT needs to receive the plurality of optical signals with different wavelengths. However, an existing bidirectional optical sub-assembly for receiving a plurality of optical signals with different wavelengths has a complex structure and limited receiving accuracy.

### SUMMARY

This application provides a bidirectional optical sub-assembly and an optical module. The bidirectional optical sub-assembly can receive a plurality of optical signals with different wavelengths, has a simple structure, and has high receiving accuracy.

According to a first aspect, a bidirectional optical sub-assembly is provided. The bidirectional optical sub-assembly includes a housing having a cavity, where a first opening, a second opening, a third opening, and a fourth opening that are in communication with the cavity are disposed on the housing, where an optical fiber is coupled in the first opening, a first receiving optical sub-assembly is coupled in the second opening, a second receiving optical sub-assembly is coupled in the third opening, and a transmitting optical sub-assembly is coupled in the fourth opening; and a first filter, a second filter, and a glass crystal are disposed in the cavity, and the glass crystal includes a first inclined face and a second inclined face that are disposed in parallel, where the optical fiber is configured to transmit a first optical signal from the first opening to the first filter in the cavity; the first filter is configured to reflect the first optical signal to the first inclined face of the glass crystal; the glass crystal is configured to transmit, to the second inclined face, the first optical signal received by the first inclined face; the second filter is configured to transparently transmit, to the first receiving optical sub-assembly of the second opening, a second optical signal that is in a first wavelength range and that is in the first optical signal received by the second inclined face; the second filter is further configured to reflect, to the first inclined face, a third optical signal that is in a second wavelength range and that is in the first optical signal received by the second inclined face; the second receiving optical sub-assembly is configured to receive the third optical signal output by the first inclined face; the transmitting optical sub-assembly is configured to transmit a fourth optical signal from the fourth opening to the first filter in the cavity; and the first filter is further configured to transparently transmit the fourth optical signal to the optical fiber of the first opening. In the bidirectional optical sub-assembly, first, the first filter, the second filter, and the glass crystal are disposed, where the first filter reflects the received first optical signal to the first inclined face of the glass crystal; the glass crystal is configured to transmit, to the second inclined face, the first optical signal received by the first inclined face; the second filter is configured to transparently transmit, to the first receiving optical sub-assembly of the second opening, the second optical signal that is in the first wavelength range and that is in the first optical signal received by the second inclined face; the second filter is further configured to reflect, to the first inclined face, the third optical signal that is in the second wavelength range and that is in the first optical signal received by the second inclined face; and the second receiving optical sub-assembly is configured to receive the third optical signal output by the first inclined face. Therefore, the bidirectional optical sub-assembly can transmit the second optical signal that is in the first wavelength range and that is in the first optical signal to the first receiving optical sub-assembly, the third optical signal that is in the second wavelength range and that is in the first optical signal to the second receiving optical sub-assembly, to implement a function of receiving two optical signals in different wavelength ranges. In addition, the bidirectional optical sub-assembly can implement, through the two filters and the one glass crystal, the function of receiving two optical signals in different wavelength ranges, and has a simple structure. Second, because the first filter is further configured to transparently transmit, to the optical fiber of the first opening, the fourth optical signal transmitted by the transmitting optical sub-assembly, the bidirectional optical sub-assembly can also implement a function of outputting an optical signal. Third, because the second filter reflects, to the first inclined face, the third optical signal that is in the second wavelength range and that is in the first optical signal received by the second inclined face, it can be learned that the second filter is attached to the second inclined face of the glass crystal, where an inclination angle of the inclined face of the glass crystal satisfies a transmission requirement of the foregoing optical signal, and precision of the inclination angle of the inclined face of the glass crystal can be controlled to be very high during manufacturing of the glass crystal. Therefore, when the second filter is attached to the glass crystal, an error of an attachment angle of the second filter is ±0.2°, and an inclined face supporting the second filter does not need to be manufactured and disposed in the cavity, so that manufacturing of the bidirectional optical sub-assembly is simpler. Because the error of the attachment angle at which the second filter is attached to the glass crystal is ±0.2°, when an optical splitting capability of the second filter is strong, the bidirectional optical sub-assembly can separately transmit two optical signals with a small wavelength difference to a specific receiving optical sub-assembly. In this way, accuracy of receiving an optical signal by the bidirectional optical sub-assembly is further improved.

Optionally, a first reflection structure and a second reflection structure are further disposed in the cavity; the second filter is specifically configured to transparently transmit the second optical signal to the first reflection structure; the first reflection structure is configured to reflect the second optical signal to the first receiving optical sub-assembly of the second opening; the second reflection structure is configured to reflect, to the second receiving optical sub-assembly of the third opening, the third optical signal received by the first inclined face; and the second receiving optical sub-assembly is specifically configured to receive the third optical signal reflected by the second reflection structure. In this optional manner, when the first reflection structure and the second reflection structure are disposed in the cavity, the first reflection structure reflects the second optical signal to the first receiving optical sub-assembly of the second opening, and the second reflection structure reflects the third optical signal to the second receiving optical sub-assembly of the third opening. In this case, disposition locations of the first receiving optical sub-assembly and the second receiving optical sub-assembly in the bidirectional optical sub-assembly may be changed, so that in the bidirectional optical sub-assembly, different locations of the receiving optical sub-assemblies can be adjusted based on different requirements.

Optionally, a fifth opening is further disposed on the housing, and a third receiving optical sub-assembly is coupled in the fifth opening; a third filter is further disposed in the cavity; the third filter is configured to transparently transmit, to the second receiving optical sub-assembly of the third opening, a fifth optical signal that is in a third wavelength range and that is in the third optical signal received by the first inclined face; the second receiving optical sub-assembly is specifically configured to receive the fifth optical signal; the third filter is further configured to reflect, to the second inclined face, a sixth optical signal that is in a fourth wavelength range and that is in the third optical signal received by the first inclined face; and the third receiving optical sub-assembly is configured to receive the sixth optical signal output by the second inclined face. In this optional manner, the third filter is added to the bidirectional optical sub-assembly; and when the third optical signal is reflected by the second filter to the first inclined face, the third filter transparently transmits, to the second receiving optical sub-assembly of the third opening, the fifth optical signal that is in the third wavelength range and that is in the third optical signal received by the first inclined face, and the third filter reflects, to the second inclined face, the sixth optical signal that is in the fourth wavelength range and that is in the third optical signal received by the first inclined face, to transmit the optical signals that is in the different wavelength ranges and that is in the third optical signal to different receiving optical sub-assemblies, so that the bidirectional optical sub-assembly can receive the three optical signals in the different wavelengths.

Optionally, a first reflection structure, a second reflection structure, and a third reflection structure are further disposed in the cavity; the second filter is specifically configured to transparently transmit the second optical signal to the first reflection structure; the first reflection structure is configured to reflect the second optical signal to the first receiving optical sub-assembly of the second opening; the third filter is specifically configured to transparently transmit the fifth optical signal to the second reflection structure; the second reflection structure is configured to reflect the fifth optical signal to the second receiving optical sub-assembly of the third opening; the third reflection structure is configured to reflect, to the third receiving optical sub-assembly of the fifth opening, the sixth optical signal received by the second inclined face; and the third receiving optical sub-assembly is specifically configured to receive the sixth optical signal reflected by the third reflection structure. In this optional manner, when the first reflection structure, the second reflection structure, and the third reflection structure are disposed in the cavity, the first reflection structure reflects the second optical signal to the first receiving optical sub-assembly of the second opening, the second reflection structure reflects the fifth optical signal to the second receiving optical sub-assembly of the third opening, and the third reflection structure reflects the sixth optical signal to the third receiving optical sub-assembly of the fifth opening. Therefore, disposition locations of the first receiving optical sub-assembly, the second receiving optical sub-assembly, and the third receiving optical sub-assembly in the bidirectional optical sub-assembly may be changed, so that in the bidirectional optical sub-assembly, different locations of the receiving optical sub-assemblies can be adjusted based on different requirements.

Optionally, a fourth filter and a reflector plate are further disposed in the cavity; the fourth filter is configured to reflect, to the second inclined face, a seventh optical signal that is in a fifth wavelength range and that is in the third optical signal received by the first inclined face; the fourth filter is further configured to transparently transmit an eighth optical signal that is in a sixth wavelength range and that is in the third optical signal received by the first inclined face; the reflector plate is configured to reflect, to the first inclined face, the seventh optical signal received by the second inclined face; and the second receiving optical sub-assembly is configured to receive the seventh optical signal output by the first inclined face. In this optional manner, because the fourth filter is disposed, when the third optical signal reflected by the second filter includes both the seventh optical signal that is in the fifth wavelength range and that needs to be received by the second receiving optical sub-assembly and the eighth optical signal in the sixth wavelength range, the fourth filter reflects, to the second inclined face, the seventh optical signal that is in the fifth wavelength range and that is in the third optical signal received by the first inclined face, and the fourth filter transparently transmits the eighth optical signal that is in the sixth wavelength range and that is in the third optical signal received by the first inclined face; the reflector plate reflects, to the first inclined face, the seventh optical signal received by the second inclined face; and the second receiving optical sub-assembly is configured to receive the seventh optical signal output by the first inclined face, so that the second receiving optical sub-assembly does not receive the eighth optical signal in the sixth wavelength range, to improve wavelength purity of the optical signal received by the second receiving optical sub-assembly.

Optionally, a fourth filter and a reflector plate are further disposed in the cavity; the reflector plate is configured to reflect, to the second inclined face, the third optical signal received by the first inclined face; the fourth filter is configured to reflect, to the first inclined face, a seventh optical signal that is in a fifth wavelength range and that is in the third optical signal received by the second inclined face; the fourth filter is further configured to transparently transmit an eighth optical signal that is in a sixth wavelength range and that is in the third optical signal received by the second inclined face; and the second receiving optical sub-assembly is configured to receive the seventh optical signal output by the first inclined face. In this optional manner, because the fourth filter is disposed, when the third optical signal reflected by the second filter includes both the seventh optical signal that is in the fifth wavelength range and that needs to received by the second receiving optical sub-assembly and the eighth optical signal in the sixth wavelength range, the reflector plate reflects, to the second inclined face, the third optical signal received by the first inclined face; the fourth filter reflects, to the first inclined face, the seventh optical signal that is in the fifth wavelength range and that in the third optical signal received by the second inclined face; the fourth filter transparently transmits the eighth optical signal that is in the sixth wavelength range and that is in the third optical signal received by the second inclined face; and the second receiving optical sub-assembly is configured to receive the seventh optical signal output by the first inclined face, so that the second receiving optical sub-assembly does not receive the eighth optical signal in the sixth wavelength range, to improve wavelength purity of the optical signal received by the second receiving optical sub-assembly.

Optionally, a first reflection structure and a second reflection structure are further disposed in the cavity; the second filter is specifically configured to transparently transmit the second optical signal to the first reflection structure; the first reflection structure is configured to reflect the second optical signal to the first receiving optical sub-assembly of the second opening; the second reflection structure is configured to reflect, to the second receiving optical sub-assembly of the third opening, the seventh optical signal received by the first inclined face; and the second receiving optical sub-assembly is specifically configured to receive the seventh optical signal reflected by the second reflection structure. Optionally, a fourth reflection structure is further disposed in the cavity; the fourth reflection structure is configured to reflect, to the second inclined face, the third optical signal received by the first inclined face; and the second receiving optical sub-assembly is specifically configured to receive the third optical signal output by the second inclined face.

Optionally, a first reflection structure and a second reflection structure are further disposed in the cavity; the second filter is specifically configured to transparently transmit the second optical signal to the first reflection structure; the first reflection structure is configured to reflect the second optical signal to the first receiving optical sub-assembly of the second opening; the second reflection structure is configured to reflect, to the second receiving optical sub-assembly of the third opening, the third optical signal received by the second inclined face; and the second receiving optical sub-assembly is specifically configured to receive the third optical signal reflected by the second reflection structure.

Optionally, a fifth opening is further disposed on the housing, and a third receiving optical sub-assembly is coupled in the fifth opening; a third filter is further disposed in the cavity; the third filter is configured to transparently transmit, to the third receiving optical sub-assembly of the fifth opening, a fifth optical signal that is in a third wavelength range and that is in the third optical signal received by the second inclined face; the third filter is further configured to reflect, to the first inclined face, a sixth optical signal that is in a fourth wavelength range and that is in the third optical signal received by the second inclined face; the fourth reflection structure is further configured to reflect, to the second inclined face, the sixth optical signal received by the first inclined face; and the second receiving optical sub-assembly is specifically configured to receive the sixth optical signal output by the second inclined face.

Optionally, a first reflection structure, a second reflection structure, and a third reflection structure are further disposed in the cavity; the second filter is specifically configured to transparently transmit the second optical signal to the first reflection structure; the first reflection structure is configured to reflect the second optical signal to the first receiving optical sub-assembly of the second opening; the third filter is specifically configured to transparently transmit the fifth optical signal to the third reflection structure; the third reflection structure is configured to reflect the fifth optical signal to the third receiving optical sub-assembly of the fifth opening; the second reflection structure is configured to reflect, to the second receiving optical sub-assembly of the third opening, the sixth optical signal received by the second inclined face; and the second receiving optical sub-assembly is specifically configured to receive the sixth optical signal reflected by the second reflection structure.

Optionally, the optical fiber is specifically configured to transmit the first optical signal from the first opening to the second inclined face of the glass crystal in the cavity; the glass crystal is configured to transmit, to the first filter through the first inclined face, the first optical signal received by the second inclined face; the first filter is specifically configured to transparently transmit the fourth optical signal to the first inclined face of the glass crystal; and the glass crystal is further configured to transmit, to the optical fiber of the first opening through the second inclined face, the fourth optical signal received by the first inclined face.

Optionally, a fifth reflection structure is further disposed in the cavity; the first filter is specifically configured to reflect the first optical signal to the fifth reflection structure; and the fifth reflection structure is configured to reflect the first optical signal to the first inclined face of the glass crystal.

According to a second aspect, a bidirectional optical sub-assembly is provided. The bidirectional optical sub-assembly includes: a housing having a cavity, where a first opening, a second opening, a third opening, and a fourth opening that are in communication with the cavity are disposed on the housing, where an optical fiber is coupled in the first opening, a first receiving optical sub-assembly is coupled in the second opening, a second receiving optical sub-assembly is coupled in the third opening, and a transmitting optical sub-assembly is coupled in the fourth opening, where a first filter, a second filter, and a glass crystal are disposed in the cavity, and the glass crystal includes a first inclined face and a second inclined face that are disposed in parallel; the optical fiber is configured to transmit the first optical signal from the first opening to the second inclined face of the glass crystal in the cavity; the glass crystal is configured to transmit, to the first inclined face, the first optical signal received by the second inclined face; the first filter is configured to transparently transmit, to the first receiving optical sub-assembly of the second opening, a second optical signal that is in a first wavelength range and that is in the first optical signal received by the first inclined face; the first filter is further configured to reflect, to the second inclined face, a third optical signal that is in a second wavelength range and that is in the first optical signal received by the first inclined face; the second filter is configured to transparently transmit, to the second receiving optical sub-assembly of the third opening, the third optical signal received by the second inclined face; the transmitting optical sub-assembly is configured to transmit a fourth optical signal from the fourth opening to the first inclined face of the glass crystal in the cavity; the glass crystal is further configured to transmit, to the second inclined face, the fourth optical signal received by the first inclined face; the second filter is further configured to reflect, to the first inclined face, the fourth optical signal received by the second inclined face; the first filter is further configured to reflect, to the second inclined face, the fourth optical signal received by the first inclined face; and the optical fiber is further configured to output the fourth optical signal received by the second inclined face. In the foregoing bidirectional optical sub-assembly, first, the first filter, the second filter, and the glass crystal are disposed, where the glass crystal is configured to transparently transmit, to the first inclined face, the first optical signal received by the second inclined face; the first filter is configured to transparently transmit, to the first receiving optical sub-assembly of the second opening, a second optical signal that is in the first wavelength range and that is in the first optical signal received by the first inclined face; the first filter is further configured to reflect, to the second inclined face, the third optical signal that is in the second wavelength range and that is in the first optical signal received by the first inclined face; and the second filter is configured to transparently transmit, to the second receiving optical sub-assembly of the third opening, the third optical signal received by the second inclined face. Therefore, the bidirectional optical sub-assembly can transmit the second optical signal that is in the first wavelength range and that is in the first optical signal to the first receiving optical sub-assembly, and transmit the third optical signal that is in the second wavelength range and that is in the first optical signal to the second receiving optical sub-assembly, to implement a function of receiving two optical signals in different wavelength ranges. In addition, the bidirectional optical sub-assembly can implement, through the two filters and the one glass crystal, the function of receiving two optical signals in different wavelength ranges, and has a simple structure. Second, the glass crystal is further configured to transmit, to the second inclined face, the fourth optical signal received by the first inclined face; the second filter is further configured to reflect, to the first inclined face, the fourth optical signal received by the second inclined face; the first filter is further configured to reflect, to the second inclined face, the fourth optical signal received by the first inclined face; and the optical fiber is further configured to output the fourth optical signal received by the first inclined face. Therefore, the bidirectional optical sub-assembly can also implement a function of outputting an optical signal. Third, because the first filter reflects, to the second inclined face, the third optical signal that is in the second wavelength range and that is in the first optical signal received by the first inclined face, it can be learned that the first filter is attached to the first inclined face of the glass crystal; and because the second filter is further configured to reflect, to the first inclined face, the fourth optical signal received by the second inclined face, it can be learned that the second filter is attached to the second inclined face of the glass crystal, where an inclination angle of the inclined face of the glass crystal satisfies a transmission requirement of the foregoing optical signal, and precision of the inclination angle of the inclined face of the glass crystal can be controlled to be very high during manufacturing of the glass crystal. Therefore, when the first filter and the second filter are attached to the glass crystal, errors of attachment angles of the first filter and the second filter are ±0.2°, and an inclined face supporting the first filter and an inclined face supporting the second filter do not need to be manufactured and disposed in the cavity, so that manufacturing of the bidirectional optical sub-assembly is simpler. Because the errors of the attachment angles at which the first filter and the second filter are attached to the glass crystal are ±0.2°, when optical splitting capabilities of the first filter and the second filter are strong, the bidirectional optical sub-assembly can separately transmit two optical signals with a small wavelength difference to a specific receiving optical sub-assembly. In this way, accuracy of receiving an optical signal by the bidirectional optical sub-assembly is further improved.

Optionally, a first reflection structure is further disposed in the cavity; the second filter is specifically configured to transparently transmit the third optical signal to the first reflection structure; and the first reflection structure is configured to reflect the third optical signal to the second receiving optical sub-assembly of the third opening. In this optional manner, when the first reflection structure is disposed in the cavity, the first reflection structure reflects the third optical signal to the second receiving optical sub-assembly of the third opening. In this case, a disposition location of the second receiving optical sub-assembly in the bidirectional optical sub-assembly may be changed, so that in the bidirectional optical sub-assembly, a location of the second receiving optical sub-assembly can be adjusted based on different requirements.

Optionally, a second reflection structure is further disposed in the cavity; the first filter is specifically configured to transparently transmit the second optical signal to the second reflection structure; and the second reflection structure is configured to reflect the second optical signal to the first receiving optical sub-assembly of the second opening. In this optional manner, when the second reflection structure is disposed in the cavity, the second reflection structure reflects the second optical signal to the first receiving optical sub-assembly of the second opening. In this case, a disposition location of the first receiving optical sub-assembly in the bidirectional optical sub-assembly may be changed, so that in the bidirectional optical sub-assembly, a location of the first receiving optical sub-assembly can be adjusted based on different requirements.

Optionally, a fifth opening is further disposed on the housing, and a third receiving optical sub-assembly is coupled in the fifth opening; a third filter is further disposed in the cavity; the second filter is specifically configured to transparently transmit, to the second receiving optical sub-assembly of the third opening, a fifth optical signal that is in a third wavelength range and that is in the third optical signal received by the second inclined face; the second filter is further configured to reflect, to the first inclined face, a sixth optical signal that is in a fourth wavelength range and that is in the third optical signal received by the second inclined face; and the third filter is configured to transparently transmit the sixth optical signal to the third receiving optical sub-assembly of the fifth opening. In this optional manner, the third filter is added to the bidirectional optical sub-assembly, and the second filter is adjusted to transparently transmit the fifth optical signal that is in the third wavelength range and that is in the third optical signal to the second receiving optical sub-assembly, and reflect the sixth optical signal that is in the fourth wavelength range and that is in the third optical signal to the first inclined face, and the third filter transparently transmits, to the third receiving optical sub-assembly, the sixth optical signal received by the first inclined face, to transmit the optical signals that are in the different wavelength ranges and that are in the third optical signal to the different receiving optical sub-assemblies, so that the bidirectional optical sub-assembly can receive the three optical signals with different wavelengths.

Optionally, a first reflection structure is further disposed in the cavity; the second filter is specifically configured to transparently transmit the fifth optical signal to the first reflection structure; and the first reflection structure is configured to reflect the fifth optical signal to the second receiving optical sub-assembly of the third opening.

Optionally, a second reflection structure and a third reflection structure are further disposed in the cavity; the first filter is specifically configured to transparently transmit the second optical signal to the second reflection structure; the second reflection structure is configured to reflect the second optical signal to the first receiving optical sub-assembly of the second opening; the third filter is specifically configured to transparently transmit the sixth optical signal to the third reflection structure; and the third reflection structure is configured to reflect the sixth optical signal to the third receiving optical sub-assembly of the fifth opening.

According to a third aspect, an optical module is provided. The optical module includes the bidirectional optical sub-assembly according to the first aspect or the second aspect and a printed circuit board, and the bidirectional optical sub-assembly is electrically connected to the printed circuit board.

### BRIEF DESCRIPTION OF DRAWINGS

FIG. 1 is a diagram of a structure of an optical fiber passive optical network according to an embodiment of this application;
FIG. 2 is a diagram of a structure of communication between two bidirectional optical sub-assemblies in an optical fiber passive optical network according to an embodiment of this application;
FIG. 3 is an exploded view of a bidirectional optical sub-assembly according to an embodiment of this application;
FIG. 4 is a diagram of a structure of an optical fiber passive optical network according to another embodiment of this application;
FIG. 5 is a diagram of a structure of a bidirectional optical sub-assembly according to still another embodiment of this application;
FIG. 6 is a diagram of a structure of a bidirectional optical sub-assembly according to yet another embodiment of this application;
FIG. 7 is a diagram of a structure of a bidirectional optical sub-assembly according to another embodiment of this application;
FIG. 8 is a diagram of a structure of a bidirectional optical sub-assembly according to still another embodiment of this application;
FIG. 9 is a diagram of a structure of a bidirectional optical sub-assembly according to yet another embodiment of this application;
FIG. 10 is a diagram of a structure of a bidirectional optical sub-assembly according to another embodiment of this application;
FIG. 11 is a diagram of a structure of a bidirectional optical sub-assembly according to still another embodiment of this application;
FIG. 12 is a diagram of a structure of a bidirectional optical sub-assembly according to yet another embodiment of this application;
FIG. 13 is a diagram of a structure of a bidirectional optical sub-assembly according to another embodiment of this application;
FIG. 14 is a diagram of a structure of a bidirectional optical sub-assembly according to still another embodiment of this application;
FIG. 15 is a diagram of a structure of a bidirectional optical sub-assembly according to yet another embodiment of this application;
FIG. 16 is a diagram of a structure of a bidirectional optical sub-assembly according to another embodiment of this application;
FIG. 17 is a diagram of a structure of a bidirectional optical sub-assembly according to still another embodiment of this application;
FIG. 18 is a diagram of a structure of a bidirectional optical sub-assembly according to yet another embodiment of this application; and
FIG. 19 is a diagram of a structure of a bidirectional optical sub-assembly according to another embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Unless otherwise defined, all technical terms used herein have same meanings as those commonly known to a person of ordinary skill in the art. In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following" or a similar expression thereof means any combination of these items, including any combination of a single item or a plurality of items. For example, at least one of a, b, or c may represent: a, b, c, a and b, a and c, b and c, or a, b, and c, where a, b, and c may be singular or plural. In addition, in embodiments of this application, terms such as "first" and "second" do not limit a quantity or an execution sequence.

In addition, in embodiments of this application, orientation terms such as "top" and "bottom" are defined relative to orientations of components in the accompanying drawings. It should be understood that these orientation terms are relative concepts used for relative description and clarification, and may correspondingly change with the orientations of the components in the accompanying drawings.

It should be noted that, in embodiments of this application, the word such as "example" or "for example" is used to represent giving an example, an illustration, or a description. Any embodiment or design solution described by using "example" or "for example" in embodiments of this application shall not be construed as being more preferred or having more advantageous than another embodiment or design solution. Exactly, the word such as "example" or "for example" is intended to present a related concept in a specific manner.

The following describes technical terms in embodiments of this application.

Downstream optical signal:
In an optical communication system, a downstream optical signal is data sent by a central control station to a communication apparatus on a user side (for example, an optical network unit (optical network unit, ONU) or an optical network terminal (optical network terminal, ONT) on the user side).

Upstream optical signal:
In an optical communication system, an upstream optical signal is data sent by a communication apparatus on a user side (for example, an optical network unit (optical network unit, ONU) or an optical network terminal (optical network terminal, ONT) on the user side) to a central control station.

The following describes technical solutions in embodiments of this application with reference to the accompanying drawings.

An optical fiber communication system has become a current mainstream communication system, in which fiber to the x (FTTx) is an access mode of an access network (access network, AN). The access network is also referred to as an optical access network (optical access network, OAN). The fiber access network includes several fiber to the x modes: fiber to the cabinet (fiber to the cabinet, FTTCab), fiber to the curb (fiber to the curb, FTTC), fiber to the building (fiber to the building, FTTB), fiber to the home (fiber to the home, FTTH), and the like.

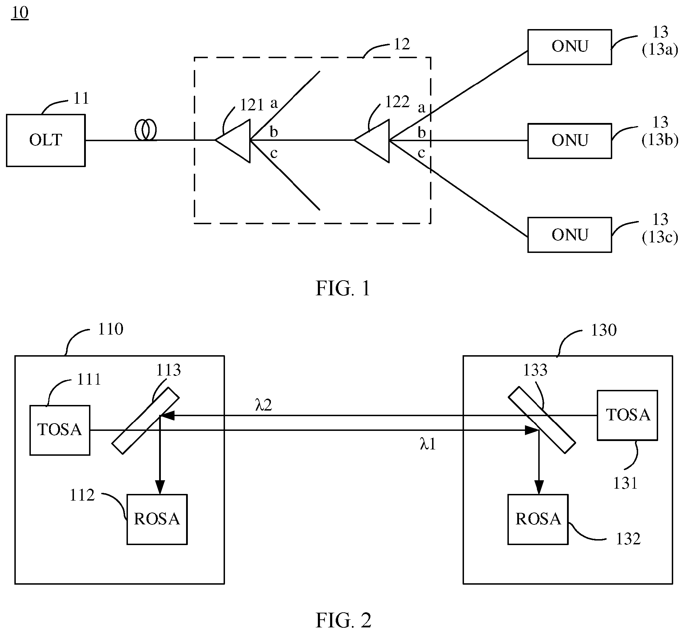

Refer to FIG. 1. Commonly, an optical fiber passive optical network (passive optical network, PON) 10 can implement fiber to the x. The PON 10 includes an optical line terminal (optical line terminal, OLT) 11 disposed at a central control station, an optical network terminal (optical network terminal, ONT) or an optical network unit (optical network unit, ONU) disposed on a user side, and the like. The ONT and the ONU are disposed at different locations on the user side for implementing similar functions. In the PON 10 shown in FIG. 1, ONUs 13 on the user side are merely used as an example for description. FIG. 1 shows three ONUs: ONU 13a, ONU 13b, and ONU 13c.

The PON 10 further includes an optical distribution network (optical distribution network, ODN) 12 that connects the OLT 11 and the ONU 13. As shown in FIG. 1, the ODN 12 includes two stages of optical splitters. A first-stage optical splitter includes an optical splitter 121, and the optical splitter 121 includes an input end, an output end a, an output end b, and an output end c. A second-stage optical splitter includes an optical splitter 122, and the optical splitter 122 includes an input end, an output end a, an output end b, and an output end c. The input end of the optical splitter 121 is connected to the OLT 11 through an optical fiber, the output end b of the optical splitter 121 is connected to the input end of the optical splitter 122 through an optical fiber, the output end a of the optical splitter 122 is connected to the ONU 13a through an optical fiber, the output end b of the optical splitter 122 is connected to the ONU 13b through an optical fiber, and the output end c of the optical splitter 122 is connected to the ONU 13c through an optical fiber.

For example, the output end a of the optical splitter 121 may be connected to a second-stage optical splitter, or the output end a of the optical splitter 121 may be connected to an ONU; and the output end c of the optical splitter 121 may be connected to a second-stage optical splitter, or the output end c of the optical splitter 121 may be connected to an ONU. For example, the optical splitter 121 and the optical splitter 122 may alternatively include more or fewer output ends. For example, the ODN 12 may include only one stage of optical splitter, or the ODN 12 may include three or more stages of a plurality of optical splitters. Functions of the ODN 12 are transmitting a downstream optical signal of the OLT 11 to any ONU 13, and transmitting an upstream optical signal of any ONU 13 to the OLT 11. A quantity of optical splitters included in the ODN 12 is not limited in embodiments of this application, and a quantity of output ports of each optical splitter is not limited either.

When the PON 10 works, the OLT 11 transmits a downstream optical signal to the ODN 12, where the input end of the optical splitter 121 in the ODN 12 receives the downstream optical signal, and the optical splitter 121 transmits the downstream optical signal from the output end b of the optical splitter 121 to the input end of the optical splitter 122, the optical splitter 122 transmits the downstream optical signal from the output end a of the optical splitter 122 to the ONU 13a, the optical splitter 122 transmits the downstream optical signal from the output end b of the optical splitter 122 to the ONU 13b, and the optical splitter 122 transmits the downstream optical signal from the output end c of the optical splitter 122 to the ONU 13c.

For example, the ONU 13a is used as an example for description. The ONU 13a receives a downstream optical signal and processes the received downstream optical signal to obtain data in the downstream optical signal.

In some other embodiments, the ONU 13a may alternatively generate an upstream optical signal that needs to be sent to the OLT 11. When the ONU 13a generates the upstream optical signal, the ONU 13a transmits the upstream optical signal to the OLT 11 through the output end a of the optical splitter 122, the input end of the optical splitter 122, the output end b of the optical splitter 121, and the input end of the optical splitter 121.

For example, in the PON 10 shown in FIG. 1, the OLT 11, the ODN 12, and the ONU 13 are all connected through optical fibers, and transmission of upstream optical signals and downstream optical signals can be performed through these optical fibers. For example, these optical fibers may be single-core bidirectional optical fibers. In addition, a wavelength of an upstream optical signal whose transmission is performed in the PON is different from a wavelength of a downstream optical signal whose transmission is performed in the PON. For example, in FIG. 1, a wavelength of a downstream optical signal transmitted from the OLT 11 to the ONU 13a is λ1, and a wavelength of an upstream optical signal transmitted from the ONU 13a to the OLT 11 is λ2, where λ1 is not equal to λ2.

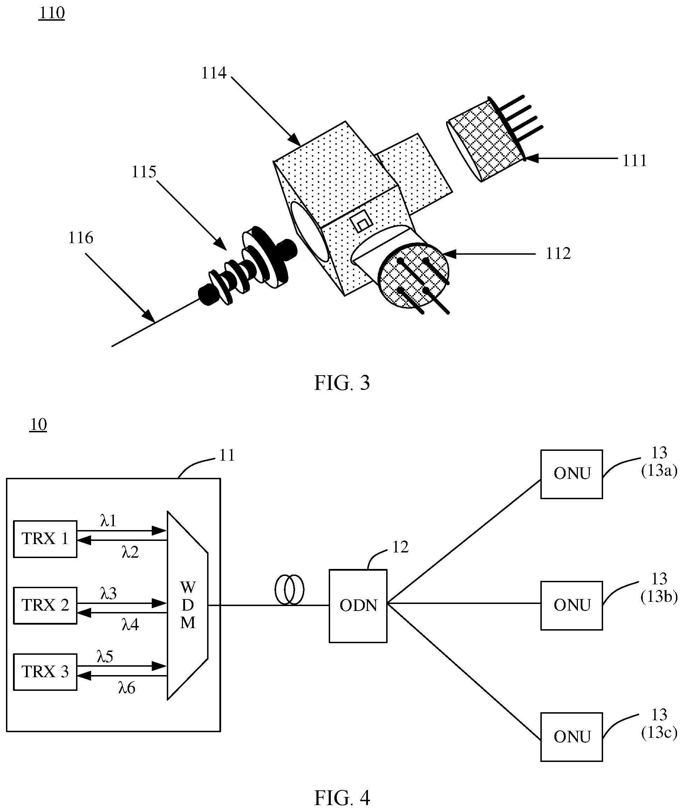

Specifically, refer to FIG. 2. To implement communication between the OLT 11 and the ONU 13a through a single-fiber bidirectional optical fiber, a bidirectional optical sub-assembly (bidirectional optical sub-assembly, BOSA) 110 needs to be disposed in the OLT 11. Refer to FIG. 3. An embodiment of this application provides an exploded view of the bidirectional optical sub-assembly 110. The bidirectional optical sub-assembly 110 includes a housing 114, and three openings are disposed on the housing 114, where a transmitting optical sub-assembly (transmitting optical sub-assembly, TOSA) 111 is coupled in a first opening of the housing 114, a receiving optical sub-assembly (receiving optical sub-assembly, ROSA) 112 is coupled in a second opening of the housing 114, a single-fiber bidirectional optical fiber 116 is coupled in a third opening of the housing 114 through an optical fiber ferrule 115, a cavity is formed in the housing 114, and a wavelength division multiplexing filter 113 is further disposed in the cavity. For example, to implement the communication between the OLT 11 and the ONU 13a through the single-fiber bidirectional optical fiber, a bidirectional optical sub-assembly 130 further needs to be disposed in the ONU 13a. A structure of the bidirectional optical sub-assembly 130 is similar to a structure of the bidirectional optical sub-assembly 110 shown in FIG. 3, and details are not described herein again. The bidirectional optical sub-assembly 130 includes a transmitting optical sub-assembly 131, a receiving optical sub-assembly 132, and a wavelength division multiplexing filter 133. The bidirectional optical sub-assembly 130 further includes an optical fiber ferrule connected to the single-fiber bidirectional optical fiber.

Specifically, refer to FIG. 2. The transmitting optical sub-assembly 111 generates a downstream optical signal with a wavelength of 11, and the wavelength division multiplexing filter 113 transparently transmits the received downstream optical signal with a wavelength of λ1, transmits the downstream optical signal with a wavelength of λ1 to the single-fiber bidirectional optical fiber 116 through the optical fiber ferrule 115 of the bidirectional optical sub-assembly 110, and then transmits the downstream optical signal with a wavelength of λ1 to the optical fiber ferrule of the bidirectional optical sub-assembly 130 through the single-fiber bidirectional optical fiber 116. The wavelength division multiplexing filter 133 in the bidirectional optical sub-assembly 130 reflects the received downstream optical signal with a wavelength of λ1 to the receiving optical sub-assembly 132, so that the receiving optical sub-assembly 132 receives and processes the downstream optical signal with a wavelength of λ1. The transmitting optical sub-assembly 131 generates an upstream optical signal with a wavelength of λ2, and the wavelength division multiplexing filter 133 transparently transmits the received upstream optical signal with a wavelength of λ2, transmits the upstream optical signal with a wavelength of λ2 to the single-fiber bidirectional optical fiber 116 through the optical fiber ferrule of the bidirectional optical sub-assembly 130, and then transmits the upstream optical signal with a wavelength of λ2 to the optical fiber ferrule 115 of the bidirectional optical sub-assembly 110 through the single-fiber bidirectional optical fiber 116, and the wavelength division multiplexing filter 113 in the bidirectional optical sub-assembly 110 reflects the received upstream optical signal with a wavelength of λ2 to the receiving optical sub-assembly 112, so that the receiving optical sub-assembly 112 receives and processes the upstream optical signal with a wavelength of λ2.

For example, an upstream optical signal is generated by each ONU on the user side, and upstream optical signals generated by different ONUs are transmitted to the OLT 11 through the ODN 12 in a time division multiplexing (time division multiplexing, TDM) manner. In a same time period, only one ONU can transmit an upstream optical signal to the OLT 11. If two ONUs simultaneously transmit upstream optical signals to the OLT 11, an ONU sending conflict occurs, and the OLT 11 cannot correctly receive the upstream optical signals.

With continuous increase of transmission rates of optical signals, three types of PONs are evolved: a gigabit-capable passive optical network (gigabit-capable passive optical network, GPON) with a maximum transmission rate of 2.5 Gbps for upstream optical signals and downstream optical signals, a 10GPON (also referred to as XGPON) with a maximum transmission rate of 10 Gbps for upstream optical signals and downstream optical signals, and a 50GPON with a maximum transmission rate of 50 Gbps for upstream optical signals and downstream optical signals. Wavelengths of upstream optical signals of different types of PONs are different, and wavelengths of downstream optical signals of different types of PONs are also different. Refer to Table 1:

**Table 1**

| | Wavelength of a downstream optical signal (nanometer: nm) | Wavelength of an upstream optical signal (nanometer: nm) |
|---|---|---|
| GPON | 1480-1500 | 1290-1330 |
| 10GPON | 1575-1580 | 1260-1280 |
| 50GPON | 1340-1344 | 1284-1288 |

It can be learned from Table 1 that a value range of the wavelength of the downstream optical signal of the GPON is 1480 nm to 1500 nm, and a value range of the wavelength of the upstream optical signal of the GPON is 1290 nm to 1330 nm; a value range of the wavelength of the downstream optical signal of the 10GPON is 1575 nm to 1580 nm, and a value range of the wavelength of the upstream optical signal of the 10GPON is 1260 nm to 1280 nm; and a value range of the wavelength of the downstream optical signal of the 50GPON is 1340 nm to 1344 nm, and a value range of the wavelength of the upstream optical signal of the 50GPON is 1284 nm to 1288 nm.

For example, with development of an optical communication system, three different types of PONs: GPON, 10GPON, and 50GPON, usually coexist in the PON 10 shown in FIG. 1. Refer to FIG. 4. To allow the three different types of PONs to coexist, the OLT 11 includes a plurality of transceivers. As shown in FIG. 4, the OLT 11 includes a transceiver TRX 1, a transceiver TRX 2, and a transceiver TRX 3. The transceiver TRX 1 is a transceiver of the GPON, a wavelength of a downstream optical signal transmitted by transceiver TRX 1 is λ1, where λ1∈[1480 nm, 1500 nm], and a wavelength of an upstream optical signal received by transceiver TRX 1 is λ2, where λ2∈[1290 nm, 1330 nm]. The transceiver TRX 2 is a transceiver of the 10GPON, a wavelength of a downstream optical signal transmitted by transceiver TRX 2 is λ3, where λ3∈[1575 nm, 1580 nm], and a wavelength of an upstream optical signal received by transceiver TRX 2 is λ4, where λ4∈[1260 nm, 1280 nm]. The transceiver TRX 3 is a transceiver of the 50GPON, a wavelength of a downstream optical signal transmitted by transceiver TRX 3 is λ5, where λ5∈[1340 nm, 1344 nm], and a wavelength of an upstream optical signal received by transceiver TRX 3 is λ6, where λ6∈[1284 nm, 1288 nm].

For example, when a plurality of transceivers are disposed in the OLT 11, the ONU on the user side may choose to communicate with any transceiver in the OLT 11; however, one ONU can choose to communicate with only one transceiver in the OLT 11. For example, the ONU 13a communicates with the TRX 1, the ONU 13b communicates with the TRX 2, and the ONU 13c communicates with the TRX 3.

When the PON 10 shown in FIG. 4 works, the TRX 1 generates a downstream optical signal with a wavelength of λ1, the TRX 2 generates a downstream optical signal with a wavelength of λ3, the TRX 3 generates a downstream optical signal with a wavelength of λ5, and the OLT 11 multiplexes the downstream optical signal with a wavelength of λ1, the downstream optical signal with a wavelength of λ3, and the downstream optical signal with a wavelength of λ5 into a multiplexed downstream optical signal by using a wavelength division multiplexing (wavelength division multiplexing, WDM) technology, and transmits the multiplexed downstream optical signal to the ONU 13a, the ONU 13b, and the ONU 13c through the ODN 12. The ONU 13a receives the downstream optical signal with a wavelength of λ1 in the multiplexed downstream optical signal, the ONU 13b receives the downstream optical signal with a wavelength of λ3 in the multiplexed downstream optical signal, and the ONU 13c receives the downstream optical signal with a wavelength of λ5 in the multiplexed downstream optical signal.

For example, when the OLT 11 shown in FIG. 4 receives an upstream optical signal, the OLT 11 may receive an upstream optical signal with a wavelength of λ2 and that is generated by the ONU 13a, may also receive an upstream optical signal with a wavelength of λ4 and that is generated by the ONU 13b, and may also receive an upstream optical signal with a wavelength of λ6 and that is generated by the ONU 13c. When a plurality of ONUs are included on the user side, because wavelengths of upstream optical signals generated by ONUs belonging to a same PON type are the same, the ONUs belonging to the same PON type do not simultaneously transmit upstream optical signals to the OLT 11. However, because wavelengths of upstream optical signals generated by ONUs belonging to different PON types are different, the plurality of ONUs belonging to the different PON types may simultaneously upload upstream optical signals. In this case, the OLT 11 receives the plurality of upstream optical signals with different wavelengths, and the bidirectional optical sub-assembly in the OLT 11 needs to receive the plurality of optical signals with different wavelengths.

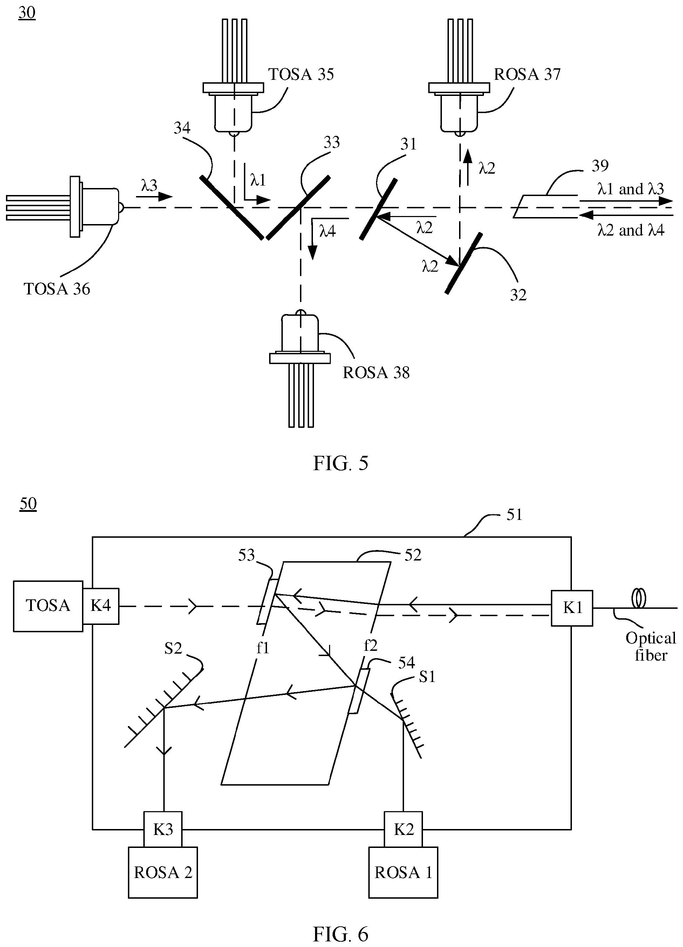

For example, an existing bidirectional optical sub-assembly that is disposed in the OLT 11 and that can receive a plurality of optical signals with different wavelengths is shown in FIG. 5. The bidirectional optical sub-assembly 30 shown in FIG. 5 includes a wavelength division multiplexing filter 31, a wavelength division multiplexing filter 32, a wavelength division multiplexing filter 33, a wavelength division multiplexing filter 34, a transmitting optical sub-assembly 35, a transmitting optical sub-assembly 36, a receiving optical sub-assembly 37, a receiving optical sub-assembly 38, and an optical fiber ferrule 39. Specifically, an optical fiber in the optical fiber ferrule 39 receives an upstream optical signal with a wavelength of λ2 and an upstream optical signal with a wavelength of λ4, and transmits the upstream optical signal with a wavelength of λ2 and the upstream optical signal with a wavelength of λ4 to the wavelength division multiplexing filter 31. The wavelength division multiplexing filter 31 reflects the upstream optical signal with a wavelength of λ2 to the wavelength division multiplexing filter 32, the wavelength division multiplexing filter 32 reflects the upstream optical signal with a wavelength of λ2 to the receiving optical sub-assembly 37, and the receiving optical sub-assembly 37 receives the upstream optical signal with a wavelength of λ2. The wavelength division multiplexing filter 31 transparently transmits the optical signal with a wavelength of λ4 to the wavelength division multiplexing filter 33, the wavelength division multiplexing filter 33 reflects the optical signal with a wavelength of λ4 to the receiving optical sub-assembly 38, and the receiving optical sub-assembly 38 receives the upstream optical signal with a wavelength of λ4. The transmitting optical sub-assembly 35 is configured to: generate a downstream optical signal with a wavelength of λ1, and transmit the downstream optical signal with a wavelength of λ1 to the wavelength division multiplexing filter 34. The wavelength division multiplexing filter 34 reflects the downstream optical signal with a wavelength of λ1 to the wavelength division multiplexing filter 33, the wavelength division multiplexing filter 33 transparently transmits the downstream optical signal with a wavelength of λ1 to the wavelength division multiplexing filter 31, the wavelength division multiplexing filter 31 transparently transmits the downstream optical signal with a wavelength of λ1 to the optical fiber ferrule 39, and the optical fiber in the optical fiber ferrule 39 outputs the downstream optical signal with a wavelength of λ1. The transmitting optical sub-assembly 36 is configured to: generate a downstream optical signal with a wavelength of λ3, and transmit the downstream optical signal with a wavelength of λ3 to the wavelength division multiplexing filter 34. The wavelength division multiplexing filter 34 transparently transmits the downstream optical signal with a wavelength of λ3 to the wavelength division multiplexing filter 33, the wavelength division multiplexing filter 33 transparently transmits the downstream optical signal with a wavelength of λ3 to the wavelength division multiplexing filter 31, the wavelength division multiplexing filter 31 transparently transmits the downstream optical signal with a wavelength of λ3 to the optical fiber ferrule 39, and the optical fiber in the optical fiber ferrule outputs the downstream optical signal with a wavelength of λ3.

The bidirectional optical sub-assembly 30 shown in FIG. 5 is of a tube-shell structure, and includes a housing having a cavity, where the wavelength division multiplexing filters are disposed in the cavity. To receive upstream optical signals of two wavelengths, a plurality of wavelength division multiplexing filters need to be disposed in the cavity of the bidirectional optical sub-assembly 30, and disposition locations and disposition angles between the plurality of wavelength division multiplexing filters need to satisfy transmitting an upstream optical signal of a specific wavelength to a specific receiving optical sub-assembly. Therefore, the bidirectional optical sub-assembly 30 has a complex structure.

For example, the wavelength division multiplexing filter may reflect an optical signal of a predetermined wavelength, and transparently transmit an optical signal of one or more wavelengths. A stronger optical splitting capability of the wavelength division multiplexing filter indicates a smaller difference between a wavelength of an optical signal reflected by the wavelength division multiplexing filter and a wavelength of an optical signal transparently transmitted by the wavelength division multiplexing filter. The optical splitting capability of the wavelength division multiplexing filter is related to a feature of a coating layer in the wavelength division multiplexing filter, and is also related to an incident angle at which an optical signal is incident to the wavelength division multiplexing filter. When manufacturing of one wavelength division multiplexing filter is completed, a feature of a coating layer in the wavelength division multiplexing filter is fixed, and an optical splitting capability of the wavelength division multiplexing filter is not affected by the feature of the coating layer. For example, when an incident angle at which an optical signal is incident to the wavelength division multiplexing filter is 30°, the wavelength division multiplexing filter may reflect an optical signal with a wavelength of 1280 nm in the incident optical signal, and transparently transmit an optical signal with a wavelength of 1284 nm in the incident optical signal. However, when the incident angle at which the optical signal is incident to the wavelength division multiplexing filter is 32°, the wavelength division multiplexing filter transparently transmits both the optical signal with a wavelength of 1280 nm and the optical signal with a wavelength of 1284 nm. It can be learned that when a difference between a wavelength of an optical signal to be reflected by the wavelength division multiplexing filter and a wavelength of an optical signal that needs to be transparently transmitted by the wavelength division multiplexing filter is smaller, an incident angle at which an optical signal is incident to the wavelength division multiplexing filter needs to be controlled.

In a manufacturing process of the bidirectional optical sub-assembly 30 shown in FIG. 5, an inclined face usually needs to be manufactured in the cavity of the bidirectional optical sub-assembly 30, and then a wavelength division multiplexing filter is attached to the inclined face. The wavelength division multiplexing filter 31 is used as an example. A manufacturing process of the wavelength division multiplexing filter 31 is as follows: When an inclined face is manufactured in the cavity of the bidirectional optical sub-assembly 30, an angle error of engineering manufacturing of the inclined face is ±0.8°, and then when the wavelength division multiplexing filter 31 is attached to the inclined face, an attachment error is ±1.5°. Therefore, a manufacturing angle error of the wavelength division multiplexing filter 31 is ±2.3°. When a wavelength difference between an upstream optical signal with a wavelength of λ2 and an upstream optical signal with a wavelength of λ4 is small, an angle error of the wavelength division multiplexing filter 31 affects an optical splitting capability of the wavelength division multiplexing filter 31. As a result, the bidirectional optical sub-assembly 30 cannot separately transmit the two upstream optical signals with the small wavelength difference to a specific receiving optical sub-assembly, and optical receiving precision of the bidirectional optical sub-assembly 30 is limited.

Therefore, an embodiment of this application provides a bidirectional optical sub-assembly. The bidirectional optical sub-assembly may be disposed in the OLT 11 shown in FIG. 4. Refer to FIG. 6. The bidirectional optical sub-assembly 50 includes a housing 51 having a cavity. An opening K1, an opening K2, an opening K3, and an opening K4 that are in communication with the cavity are disposed on the housing 51, where an optical fiber is coupled in the opening K1, a receiving optical sub-assembly ROSA 1 is coupled in the opening K2, a receiving optical sub-assembly ROSA 2 is coupled in the opening K3, and a transmitting optical sub-assembly TOSA is coupled in the opening K4. A filter 53, a filter 54, and a glass crystal 52 are disposed in the cavity, and the glass crystal 52 includes an inclined face f1 and an inclined face f2 that are disposed in parallel. For example, the bidirectional optical sub-assembly 50 is of a tube-shell structure. FIG. 6 shows merely a sectional view of the bidirectional optical sub-assembly 50 along an optical transmission direction. In the bidirectional optical sub-assembly 50 shown in FIG. 6, the opening K1 is opposite to the inclined face f2, and the opening K4 is opposite to the inclined face f1.

When the bidirectional optical sub-assembly 50 shown in FIG. 6 receives an optical signal, the optical fiber is configured to transmit a first optical signal from the opening K1 to the filter 53 in the cavity. For example, the first optical signal includes a plurality of upstream optical signals with different wavelengths. Usually, the optical fiber is coupled to the opening K1 through an optical fiber ferrule, in other words, the optical fiber ferrule used as a pluggable connector needs to be connected to the optical fiber. When the optical fiber transmits the first optical signal from the opening K1 to the filter 53 in the cavity, the first optical signal usually first passes through a collimation lens and then is transmitted to the filter 53. For example, the collimation lens may be integrated into the optical fiber ferrule, and disposed on an optical path between the optical fiber and the filter 53, or the collimation lens may be disposed on an inner side of the opening K1, so that the first optical signal transmitted by the optical fiber reaches the collimation lens after passing through the optical fiber ferrule, and enters the filter 53 after being collimated by the collimation lens. For example, the first optical signal may include an optical signal whose wavelength range is 1290 nm to 1330 nm and an optical signal whose wavelength range is 1260 nm to 1280 nm; the first optical signal may include an optical signal whose wavelength range is 1290 nm to 1330 nm and an optical signal whose wavelength range is 1284 nm to 1288 nm; the first optical signal may include an optical signal whose wavelength range is 1260 nm to 1280 nm and an optical signal whose wavelength range is 1284 nm to 1288 nm; the first optical signal may include an optical signal whose wavelength range is 1290 nm to 1330 nm and an optical signal whose wavelength range is 1260 nm to 1288 nm; the first optical signal may include an optical signal whose wavelength range is 1284 nm to 1330 nm and an optical signal whose wavelength range is 1260 nm to 1280 nm; or the first optical signal may include an optical signal whose wavelength range is 1284 nm to 1288 nm and an optical signal whose wavelength range is 1290 nm to 1330 nm and 1260 nm to 1280 nm. This is not limited in embodiments of this application.

The filter 53 is configured to reflect the first optical signal to the inclined face f1 of the glass crystal 52. The glass crystal 52 is configured to transmit, to the inclined face f2, the first optical signal received by the inclined face f1. The filter 54 is configured to transparently transmit, to the receiving optical sub-assembly ROSA 1 of the opening K2, a second optical signal that is in the first wavelength range and that is in the first optical signal received by the inclined face f2. For example, the first optical signal includes an optical signal whose wavelength range is 1290 nm to 1330 nm and an optical signal whose wavelength range is 1260 nm to 1280 nm, where the second optical signal that is in the first wavelength range and that is the first optical signal may be an optical signal whose wavelength range is 1290 nm to 1330 nm, and the first wavelength range is the wavelength range of 1290 nm to 1330 nm. In this case, the optical signal whose wavelength range is 1290 nm to 1330 nm is transmitted to the receiving optical sub-assembly ROSA 1, and the receiving optical sub-assembly ROSA 1 receives and processes the optical signal whose wavelength range is 1290 nm to 1330 nm. The filter 54 is further configured to reflect, to the inclined face f1, a third optical signal that is in a second wavelength range and that is in the first optical signal received by the inclined face f2; and the receiving optical sub-assembly ROSA 2 is configured to receive the third optical signal output by the inclined face f1. For example, the third optical signal that is in the second wavelength range and that is the first optical signal may be an optical signal whose wavelength range is 1260 nm to 1280 nm, where the second wavelength range is the wavelength range of 1260 nm to 1280 nm. In this case, the optical signal whose wavelength range is 1260 nm to 1280 nm is transmitted to the receiving optical sub-assembly ROSA 2, and the receiving optical sub-assembly ROSA 2 receives and processes the optical signal whose wavelength range is 1260 nm to 1280 nm.

For example, when the first optical signal includes an optical signal whose wavelength range is 1284 nm to 1288 nm and an optical signal whose wavelength range is 1290 nm to 1330 nm and 1260 nm to 1280 nm, the filter 54 is configured to transparently transmit, to the receiving optical sub-assembly ROSA 1 of the opening K2, the second optical signal that is in the first wavelength range and that is in the first optical signal received by the inclined face f2; the filter 54 is further configured to reflect, to the inclined face f1, a third optical signal that is in a second wavelength range and that is in the first optical signal received by the inclined face f2; and the receiving optical sub-assembly ROSA 2 is configured to receive the third optical signal output by the inclined face f1. The second optical signal that is in the first wavelength range and that is in the first optical signal is an optical signal whose wavelength range is 1284 nm to 1288 nm, and the first wavelength range is the wavelength range of 1284 nm to 1288 nm. In this case, the optical signal whose wavelength range is 1284 nm to 1288 nm is transmitted to the receiving optical sub-assembly ROSA 1, and the receiving optical sub-assembly ROSA 1 receives and processes the optical signal whose wavelength range is 1284 nm to 1288 nm. The third optical signal that is in the second wavelength range and that is in the first optical signal may be an optical signal whose wavelength range is 1290 nm to 1330 nm and 1260 nm to 1280 nm, and the second wavelength range is the wavelength range of 1290 nm to 1330 nm and 1260 nm to 1280 nm. In this case, the optical signal whose wavelength range is 1290 nm to 1330 nm and 1260 nm to 1280 nm is transmitted to the receiving optical sub-assembly ROSA 2, and the receiving optical sub-assembly ROSA 2 receives and processes the optical signal whose wavelength range is 1290 nm to 1330 nm and 1260 nm to 1280 nm. The first wavelength range may be a continuous wavelength range or several discontinuous wavelength ranges, and the second wavelength range may be a continuous wavelength range or several discontinuous wavelength ranges, provided that the first wavelength range is different from the second wavelength range. This is not limited in embodiments of this application.

When the bidirectional optical sub-assembly 50 shown in FIG. 6 outputs an optical signal, the transmitting optical sub-assembly TOSA is configured to transmit a fourth optical signal from the opening K4 to the filter 53 in the cavity. For example, the fourth optical signal may be a downstream optical signal, and the fourth optical signal may include at least one of the following optical signals: a downstream optical signal whose wavelength range is 1480 nm to 1500 nm, a downstream optical signal whose wavelength range is 1575 nm to 1580 nm, and a downstream optical signal whose wavelength range is 1340 nm to 1344 nm. The wavelength range of the fourth optical signal is different from the wavelength range of the first optical signal. The filter 53 is further configured to transparently transmit the fourth optical signal to the optical fiber of the opening K1, so that the optical fiber outputs the fourth optical signal.

Specifically, both the filter 53 and the filter 54 may be referred to as wavelength division multiplexing filters. A wavelength range of an optical signal that can be transparently transmitted by the filter 53 in the bidirectional optical sub-assembly 50 shown in FIG. 6 is the wavelength range of the fourth optical signal, a wavelength range of an optical signal that can be reflected by the filter 53 is the wavelength range of the first optical signal, a wavelength range of an optical signal that can be transparently transmitted by the filter 54 is the first wavelength range, and a wavelength range of an optical signal that can be reflected by the filter 54 is the second wavelength range.

In the bidirectional optical sub-assembly 50, first, the filter 53, the filter 54, and the glass crystal 52 are disposed, where the filter 53 reflects the received first optical signal to the inclined face f1 of the glass crystal 52; the glass crystal 52 is configured to transmit, to the inclined face f2, the first optical signal received by the inclined face f1; the filter 54 is configured to transparently transmit, to the receiving optical sub-assembly ROSA 1 of the opening K2, the second optical signal that is in the first wavelength range and that is in the first optical signal received by the inclined face f2; the filter 54 is further configured to reflect, to the inclined face f1, the third optical signal that is in the second wavelength range and that is in the first optical signal received by the inclined face f2; and the receiving optical sub-assembly ROSA 2 is configured to receive the third optical signal output by the inclined face f1. Therefore, the bidirectional optical sub-assembly 50 may transmit the second optical signal that is in the first wavelength range and that is in the first optical signal to the receiving optical sub-assembly ROSA 1, and transmit the third optical signal that is in the second wavelength range and that is in the first optical signal to the receiving optical sub-assembly ROSA 2, to implement a function of receiving two optical signals in different wavelength ranges, and the bidirectional optical sub-assembly can implement, through two filters and one glass crystal, the function of receiving two optical signals in different wavelength ranges, and has a simple structure. Second, because the filter 53 is further configured to transparently transmit, to the optical fiber of the opening K1, the fourth optical signal transmitted by the transmitting optical sub-assembly TOSA, the bidirectional optical sub-assembly 50 can also implement a function of outputting an optical signal. Third, because the filter 54 reflects, to the inclined face f1, the third optical signal that is in the second wavelength range and that is in the first optical signal received by the inclined face f2, it can be learned that the filter 54 is attached to the inclined face f2 of the glass crystal 52, where an inclination angle of the inclined face of the glass crystal 52 satisfies a transmission requirement of the foregoing optical signal, and the inclination angle of the inclined face of the glass crystal 52 can be highly precisely controlled during manufacturing of the glass crystal 52. Therefore, when the filter 54 is attached to the glass crystal 52, an error of an attachment angle of the filter 54 is ±0.2°, and an inclined face supporting the filter 54 does not need to be manufactured and disposed in the cavity, so that manufacturing of the bidirectional optical sub-assembly 50 is simpler. Because the error of the attachment angle at which the filter 54 is attached to the glass crystal 52 is ±0.2°, when an optical splitting capability of the filter 54 is strong, the bidirectional optical sub-assembly 50 can separately transmit two optical signals with a small wavelength difference to a specific receiving optical sub-assembly. In this way, accuracy of receiving an optical signal by the bidirectional optical sub-assembly 50 is further improved.

In some embodiments, to further reduce manufacturing complexity of the bidirectional optical sub-assembly 50, the filter 53 may also be attached to the inclined face of the glass crystal 52. Refer to FIG. 6. The filter 53 is attached to the inclined face f1 of the glass crystal 52. In this case, the optical fiber is specifically configured to transmit the first optical signal from the opening K1 to the inclined face f2 of the glass crystal 52 in the cavity; and the glass crystal 52 is configured to transmit, to the filter 53 through the inclined face f1, the first optical signal received by the inclined face f2, so that the filter 53 reflects the first optical signal to the inclined face f1 of the glass crystal 52. The filter 53 is specifically configured to transparently transmit the fourth optical signal to the inclined face f1 of the glass crystal 52; and the glass crystal 52 is further configured to transmit, to the optical fiber of the opening K1 through the inclined face f2, the fourth optical signal received by the inclined face f1, so that the optical fiber outputs the fourth optical signal.

In some other embodiments, to facilitate disposition of locations of the receiving optical sub-assemblies ROSA 1 and ROSA 2 in the bidirectional optical sub-assembly 50, a reflection structure S1 and a reflection structure S2 are further disposed in the cavity, as shown in FIG. 6.

In this case, the filter 54 is specifically configured to transparently transmit the second optical signal to the reflection structure S1, and the reflection structure S1 is configured to reflect the second optical signal to the receiving optical sub-assembly ROSA 1 of the opening K2. For example, a first bracket may be disposed on the glass crystal 52, the reflection structure S1 is mounted on the first bracket, and the reflection structure S1 and the glass crystal 52 are integrated together; or a second bracket is disposed in the cavity, the reflection structure S1 is mounted on the second bracket, and the reflection structure S1 and the glass crystal 52 are not integrated together. Whether the reflection structure S1 and the glass crystal 52 are integrated together is not limited in embodiments of this application. For example, the reflection structure S1 may be a reflective film, a reflective surface, or a reflective mirror. This is not limited in embodiments of this application.

The reflection structure S2 is configured to reflect, to the receiving optical sub-assembly ROSA 2 of the opening K3, the third optical signal received by the inclined face f1. The receiving optical sub-assembly ROSA2 is specifically configured to receive the third optical signal reflected by the reflection structure S2. For example, a third bracket may be disposed on the glass crystal 52, the reflection structure S2 is mounted on the third bracket, and the reflection structure S2 and the glass crystal 52 are integrated together; or a fourth bracket is disposed in the cavity, the reflection structure S1 is mounted on the fourth bracket, and the reflection structure S2 and the glass crystal 52 are not integrated together. Whether the reflection structure S2 and the glass crystal 52 are integrated together is not limited in embodiments of this application. For example, the reflection structure S2 may be a reflective film, a reflective surface, or a reflective mirror. This is not limited in embodiments of this application.

When the reflection structure S1 and the reflection structure S2 are disposed in the cavity, the reflection structure S1 reflects the second optical signal to the receiving optical sub-assembly ROSA 1 of the opening K2, and the reflection structure S2 reflects the third optical signal to the receiving optical sub-assembly ROSA2 of the opening K3. In this case, disposition locations of the receiving optical sub-assembly ROSA 1 and the receiving optical sub-assembly ROSA 2 in the bidirectional optical sub-assembly may be changed. For example, both the receiving optical sub-assembly ROSA 1 and the receiving optical sub-assembly ROSA 2 may be disposed at a first end of the inclined face f2 (or the inclined face f1). Based on a placement location of the bidirectional optical sub-assembly 50 shown in FIG. 6, the first end may be a lower end of the inclined face f2 (or the inclined face f1). For another example, both the receiving optical sub-assembly ROSA 1 and the receiving optical sub-assembly ROSA 2 may be disposed at a second end of the inclined face f2 (or the inclined face f1). Based on a placement location of the bidirectional optical sub-assembly 50 shown in FIG. 6, the second end may be an upper end of the inclined face f2 (or the inclined face f1). For still another example, the receiving optical sub-assembly ROSA 1 may be disposed at a first end of the inclined face f2 (or the inclined face f1), and the receiving optical sub-assembly ROSA 2 may be disposed at a second end of the inclined face f2 (or the inclined face f1); or the receiving optical sub-assembly ROSA 1 is disposed at a second end of the inclined face f2 (or the inclined face f1), and the receiving optical sub-assembly ROSA 2 is disposed at a first end of the inclined face f2 (or the inclined face f1). Disposition locations of the receiving optical sub-assembly ROSA 1 and the receiving optical sub-assembly ROSA 2 are not limited in embodiments of this application. Both the receiving optical sub-assembly ROSA 1 and the receiving optical sub-assembly ROSA 2 shown in FIG. 6 are disposed at the first end of the inclined face f2 (or the inclined face f1).

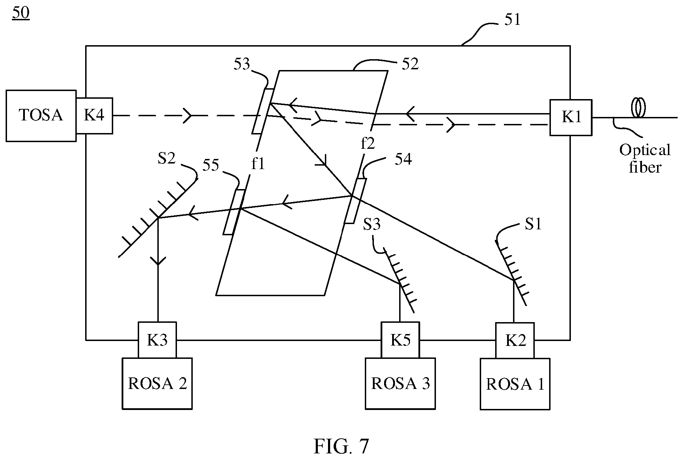

In some still other embodiments, the bidirectional optical sub-assembly 50 may respectively transmit optical signals in three different wavelength ranges to corresponding receiving optical sub-assemblies ROSAs. Refer to FIG. 7. Based on the bidirectional optical sub-assembly 50 shown in FIG. 6, in the bidirectional optical sub-assembly 50 shown in FIG. 7, an opening K5 is further disposed on the housing 51, a receiving optical sub-assembly ROSA 3 is coupled in the opening K5, and a filter 55 is further disposed in the cavity. A process in which the bidirectional optical sub-assembly 50 shown in FIG. 7 outputs a fourth optical signal is consistent with a process in which the bidirectional optical sub-assembly 50 shown in FIG. 6 outputs the fourth optical signal, and details are not described herein again.

When the bidirectional optical sub-assembly shown in FIG. 7 receives an optical signal, the optical fiber is configured to transmit a first optical signal from the opening K1 to the filter 53 in the cavity. For example, the first optical signal includes a plurality of upstream optical signals with different wavelengths. For example, the first optical signal may include a second optical signal whose wavelength range is 1290 nm to 1330 nm and a third optical signal whose wavelength range is 1260 nm to 1288 nm.

The filter 53 is configured to reflect the first optical signal to the inclined face f1 of the glass crystal 52. The glass crystal 52 is configured to transmit, to the inclined face f2, the first optical signal received by the inclined face f1. The filter 54 is configured to transparently transmit, to the receiving optical sub-assembly ROSA 1 of the opening K2, a second optical signal that is in a first wavelength range and that is in the first optical signal received by the inclined face f2. For example, the second optical signal that is in the first wavelength range and that is in the first optical signal may be the second optical signal whose wavelength range is 1290 nm to 1330 nm. In this case, the second optical signal whose wavelength range is 1290 nm to 1330 nm is transmitted to the receiving optical sub-assembly ROSA 1, and the receiving optical sub-assembly ROSA 1 receives and processes the second optical signal whose wavelength range is 1290 nm to 1330 nm.

The filter 54 is further configured to reflect, to the inclined face f1, a third optical signal that is in a second wavelength range and that is in the first optical signal received by the inclined face f2. For example, the third optical signal that is in the second wavelength range and that is in the first optical signal may be the third optical signal whose wavelength range is 1260 nm to 1288 nm, and the third optical signal includes a fifth optical signal whose wavelength range is 1260 nm to 1280 nm and a sixth optical signal whose wavelength range is 1284 nm to 1288 nm. The filter 55 is configured to transparently transmit, to the receiving optical sub-assembly ROSA 2 of the opening K3, a fifth optical signal that is in a third wavelength range and that is in the third optical signal received by the inclined face f1. The receiving optical sub-assembly ROSA 2 is specifically configured to receive the fifth optical signal. For example, the fifth optical signal that is in the third wavelength range and that is in the third optical signal may be the fifth optical signal whose wavelength range is 1260 nm to 1280 nm. In this case, the fifth optical signal whose wavelength range is 1260 nm to 1280 nm is transmitted to the receiving optical sub-assembly ROSA 2, and the receiving optical sub-assembly ROSA 2 receives and processes the fifth optical signal whose wavelength range is 1260 nm to 1280 nm.

The filter 55 is further configured to reflect, to the inclined face f2, a sixth optical signal that is in a fourth wavelength range and that is in the third optical signal received by the inclined face f1. The receiving optical sub-assembly ROSA 3 is configured to receive the sixth optical signal output by the inclined face f2. For example, the sixth optical signal that is in the fourth wavelength range and that is in the third optical signal may be the sixth optical signal whose wavelength range is 1284 nm to 1288 nm. In this case, the sixth optical signal whose wavelength range is 1284 nm to 1288 nm is transmitted to the receiving optical sub-assembly ROSA 3, and the receiving optical sub-assembly ROSA 3 receives and processes the sixth optical signal whose wavelength range is 1284 nm to 1288 nm.

Specifically, the filter 53, the filter 54, and the filter 55 may all be referred to as wavelength division multiplexing filters. A wavelength range of an optical signal that can be transparently transmitted by the filter 53 in the bidirectional optical sub-assembly 50 shown in FIG. 7 is a wavelength range of the fourth optical signal; a wavelength range of an optical signal that can be reflected by the filter 53 is a wavelength range of the first optical signal; a wavelength range of an optical signal that can be transparently transmitted by the filter 54 is the first wavelength range; a wavelength range of an optical signal that can be reflected by the filter 54 is the second wavelength range, where the second wavelength range includes the third wavelength range and the fourth wavelength range; a wavelength range of an optical signal that can be transparently transmitted by the filter 55 is the third wavelength range; and a wavelength range of an optical signal that can be reflected by the filter 55 is the fourth wavelength range.

For example, as shown in FIG. 7, because the filter 55 is further configured to reflect, to the inclined face f2, the sixth optical signal that is in the fourth wavelength range and that is in the third optical signal received by the inclined face f1, the filter 55 may also be attached to the glass crystal 52, so that the manufacturing complexity of the bidirectional optical sub-assembly 50 is reduced.

In some embodiments, as shown in FIG. 7, to facilitate disposition of locations of the receiving optical sub-assembly ROSA 1, the receiving optical sub-assembly ROSA 2, and the receiving optical sub-assembly ROSA 3 in the bidirectional optical sub-assembly 50, a reflection structure S1, a reflection structure S2, and a reflection structure S3 are further disposed in the cavity, as shown in FIG. 7.

In this case, the filter 54 is specifically configured to transparently transmit the second optical signal to the reflection structure S1, and the reflection structure S1 is configured to reflect the second optical signal to the receiving optical sub-assembly ROSA 1 of the opening K2. For example, a first bracket may be disposed on the glass crystal 52, the reflection structure S1 is mounted on the first bracket, and the reflection structure S1 and the glass crystal 52 are integrated together; or a second bracket is disposed in the cavity, the reflection structure S1 is mounted on the second bracket, and the reflection structure S1 and the glass crystal 52 are not integrated together. Whether the reflection structure S1 and the glass crystal 52 are integrated together is not limited in embodiments of this application. For example, the reflection structure S1 may be a reflective film, a reflective surface, or a reflective mirror. This is not limited in embodiments of this application.

The filter 55 is specifically configured to transparently transmit the fifth optical signal to the reflection structure S2. The reflection structure S2 is configured to reflect the fifth optical signal to the receiving optical sub-assembly ROSA2 of the opening K3. The receiving optical sub-assembly ROSA 2 is specifically configured to receive the fifth optical signal reflected by the reflection structure S2. For example, a third bracket may be disposed on the glass crystal 52, the reflection structure S2 is mounted on the third bracket, and the reflection structure S2 and the glass crystal 52 are integrated together; or a fourth bracket is disposed in the cavity, the reflection structure S2 is mounted on the fourth bracket, and the reflection structure S2 and the glass crystal 52 are not integrated together. Whether the reflection structure S2 and the glass crystal 52 are integrated together is not limited in embodiments of this application. For example, the reflection structure S2 may be a reflective film, a reflective surface, or a reflective mirror. This is not limited in embodiments of this application.

The reflection structure S3 is configured to reflect, to the receiving optical sub-assembly ROSA 3 of the opening K5, the sixth optical signal received by the inclined face f2. The receiving optical sub-assembly ROSA 3 is specifically configured to receive the sixth optical signal reflected by the reflection structure S3. For example, a fifth bracket may be disposed on the glass crystal 52, the reflection structure S3 is mounted on the fifth bracket, and the reflection structure S3 and the glass crystal 52 are integrated together; or a sixth bracket is disposed in the cavity, the reflection structure S3 is mounted on the sixth bracket, and the reflection structure S3 and the glass crystal 52 are not integrated together. Whether the reflection structure S3 and the glass crystal 52 are integrated together is not limited in embodiments of this application. For example, the reflection structure S3 may be a reflective film, a reflective surface, or a reflective mirror. This is not limited in embodiments of this application.

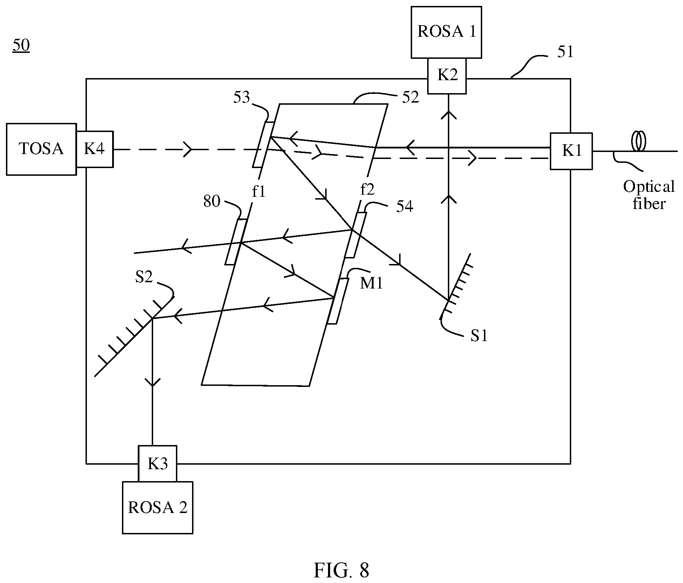

In some embodiments, as shown in FIG. 8, in comparison with the bidirectional optical sub-assembly 50 shown in FIG. 6, a filter 80 and a reflector plate M1 are further disposed in the cavity of the bidirectional optical sub-assembly 50 shown in FIG. 8. For example, the reflector plate M1 includes a filter and a reflection structure, where the reflection structure includes a reflective film, a reflective surface, and a reflective mirror.

For example, the optical fiber transmits a first optical signal from the opening K1 to the filter 53 in the cavity, where the first optical signal includes a second optical signal in a first wavelength range and a third optical signal in a second wavelength range, and the filter 53 reflects the first optical signal to the inclined face f1 of the glass crystal 52; the glass crystal 52 transmits, to the inclined face f2, the first optical signal received by the inclined face f1; the filter 54 transparently transmits, to the receiving optical sub-assembly ROSA 1 of the opening K2, the second optical signal that is in the first wavelength range and that is in the first optical signal received by the inclined face f2; the filter 54 further reflects, to the inclined face f1, the third optical signal that is in the second wavelength range and that is in the first optical signal received by the inclined face f2; the filter 80 is configured to reflect, to the inclined face f2, a seventh optical signal that is in a fifth wavelength range and that is in the third optical signal received by the inclined face f1; the filter 80 is further configured to transparently transmit an eighth optical signal that is in a sixth wavelength range and that is in the third optical signal received by the inclined face f1; the reflector plate M1 is configured to reflect, to the inclined face f1, the seventh optical signal received by the inclined face f2; and the receiving optical sub-assembly ROSA 2 is configured to receive the seventh optical signal output by the inclined face f1.

For example, the filter 53, the filter 54, and the filter 80 may all be referred to as wavelength division multiplexing filters. A wavelength range of an optical signal that can be transparently transmitted by the filter 53 in the bidirectional optical sub-assembly 50 shown in FIG. 8 is a wavelength range of a fourth optical signal, a wavelength range of an optical signal that can be reflected by the filter 53 is a wavelength range of the first optical signal, a wavelength range of an optical signal that can be transparently transmitted by the filter 54 is the first wavelength range, a wavelength range of an optical signal that can be reflected by the filter 54 is the second wavelength range, a wavelength range of an optical signal that can be transparently transmitted by the filter 80 is the sixth wavelength range, and a wavelength range of an optical signal that can be reflected by the filter 80 is the fifth wavelength range. For example, when the reflector plate M1 is a filter, the filter is referred to as a wavelength division multiplexing filter, a wavelength range of an optical signal that can be transparently transmitted by the filter is the sixth wavelength range, and a wavelength range of an optical signal that can be reflected by the filter is the fifth wavelength range.

For example, because the filter 80 reflects, to the inclined face f2, the seventh optical signal that is in the fifth wavelength range and that is in the third optical signal received by the inclined face f1, it can be learned that the filter 80 is attached to the inclined face f1 of the glass crystal 52. Because the reflector plate M1 reflects, to the inclined face f1, the seventh optical signal received by the inclined face f2, it can be learned that the reflector plate M1 is attached to the inclined face f2 of the glass crystal 52.

Because the filter 80 is disposed, when the third optical signal reflected by the filter 54 includes both the seventh optical signal that is in the fifth wavelength range and that needs to be received by the receiving optical sub-assembly ROSA 2 and the eighth optical signal in the sixth wavelength range, the filter 80 reflects, to the inclined face f2, the seventh optical signal that is in the fifth wavelength range and that is in the third optical signal received by the inclined face f1, and the filter 80 transparently transmits the eighth optical signal that is in the sixth wavelength range and that is in the third optical signal received by the inclined face f1; the reflector plate M1 reflects, to the inclined face f1, the seventh optical signal received by the inclined face f2; and the receiving optical sub-assembly ROSA 2 is configured to receive the seventh optical signal output by the inclined face f1, so that the receiving optical sub-assembly ROSA 2 does not receive the eighth optical signal that is in the sixth wavelength range and that is in the third optical signal, to improve wavelength purity of the optical signal received by the receiving optical sub-assembly ROSA 2.

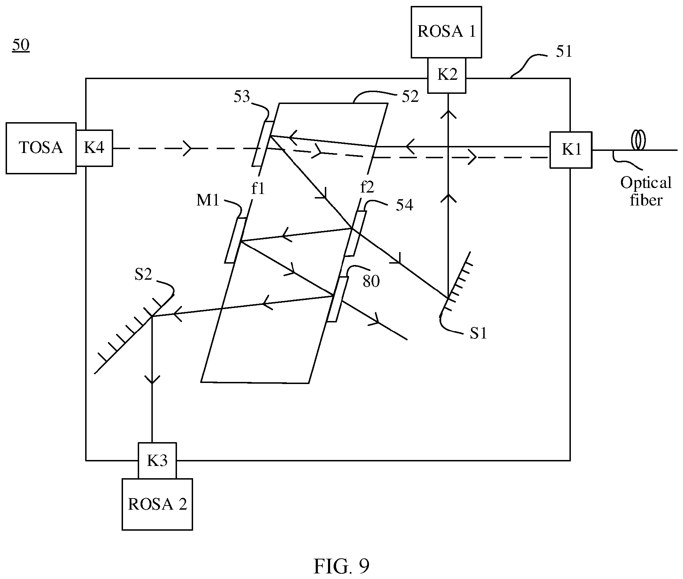

In some other embodiments, as shown in FIG. 9, in comparison with the bidirectional optical sub-assembly 50 shown in FIG. 6, a filter 80 and a reflector plate M1 are further disposed in the cavity of the bidirectional optical sub-assembly 50 shown in FIG. 9. For example, the reflector plate M1 includes a filter and a reflection structure, where the reflection structure includes a reflective film, a reflective surface, and a reflective mirror.

For example, the optical fiber transmits a first optical signal from the opening K1 to the filter 53 in the cavity, where the first optical signal includes a second optical signal in a first wavelength range and a third optical signal in a second wavelength range, and the filter 53 reflects the first optical signal to the inclined face f1 of the glass crystal 52; the glass crystal 52 transmits, to the inclined face f2, the first optical signal received by the inclined face f1; the filter 54 transparently transmits, to the receiving optical sub-assembly ROSA 1 of the opening K2, the second optical signal that is in the first wavelength range and that is in the first optical signal received by the inclined face f2; the filter 54 further reflects, to the inclined face f1, the third optical signal that is in the second wavelength range and that is in the first optical signal received by the inclined face f2; the reflector plate M1 reflects, to the inclined face f2, the third optical signal received by the inclined face f1; the filter 80 is configured to reflect, to the inclined face f1, a seventh optical signal that is in a fifth wavelength range and that is in the third optical signal received by the inclined face f2; the filter 80 is further configured to transparently transmit an eighth optical signal that is in a sixth wavelength range and that is in the third optical signal received by the inclined face f1; and the receiving optical sub-assembly ROSA 2 is configured to receive the seventh optical signal output by the inclined face f1.

For example, the filter 53, the filter 54, and the filter 80 may all be referred to as wavelength division multiplexing filters. A wavelength range of an optical signal that can be transparently transmitted by the filter 53 in the bidirectional optical sub-assembly 50 shown in FIG. 9 is a wavelength range of a fourth optical signal, a wavelength range of an optical signal that can be reflected by the filter 53 is a wavelength range of the first optical signal, a wavelength range of an optical signal that can be transparently transmitted by the filter 54 is the first wavelength range, a wavelength range of an optical signal that can be reflected by the filter 54 is the second wavelength range, a wavelength range of an optical signal that can be transparently transmitted by the filter 80 is the sixth wavelength range, and a wavelength range of an optical signal that can be reflected by the filter 80 is the fifth wavelength range. For example, when the reflector plate M1 is a filter, the filter is referred to as a wavelength division multiplexing filter, a wavelength range of an optical signal that can be transparently transmitted by the filter is the sixth wavelength range, and a wavelength range of an optical signal that can be reflected by the filter is the fifth wavelength range.

For example, because the reflector plate M1 reflects, to the inclined face f2, the third optical signal received by the inclined face f1, it can be learned that the reflector plate M1 is attached to the inclined face f1 of the glass crystal 52. Because the filter 80 reflects, to the inclined face f1, the seventh optical signal that is in the fifth wavelength range and that is in the third optical signal received by the inclined face f2, it can be learned that the filter 80 is attached to the inclined face f2 of the glass crystal 52.

Because the filter 80 is disposed, when the third optical signal reflected by the filter 54 includes both the seventh optical signal that is in the fifth wavelength range and that needs to be received by the receiving optical sub-assembly ROSA 2 and the eighth optical signal in the sixth wavelength range, the reflector M1 reflects, to the inclined face f2, the third optical signal received by the inclined face f1; the filter 80 reflects, to the inclined face f1, the seventh optical signal that is in the fifth wavelength range and that is in the third optical signal received by the inclined face f2; the filter 80 transparently transmits the eighth optical signal that is in the sixth wavelength range and that is in the third optical signal received by the inclined face f1; and the receiving optical sub-assembly ROSA 2 is configured to receive the seventh optical signal output by the inclined face f1, so that the receiving optical sub-assembly ROSA 2 does not receive the eighth optical signal that is in the sixth wavelength range and that is in the third optical signal, to improve wavelength purity of the optical signal received by the receiving optical sub-assembly ROSA 2.

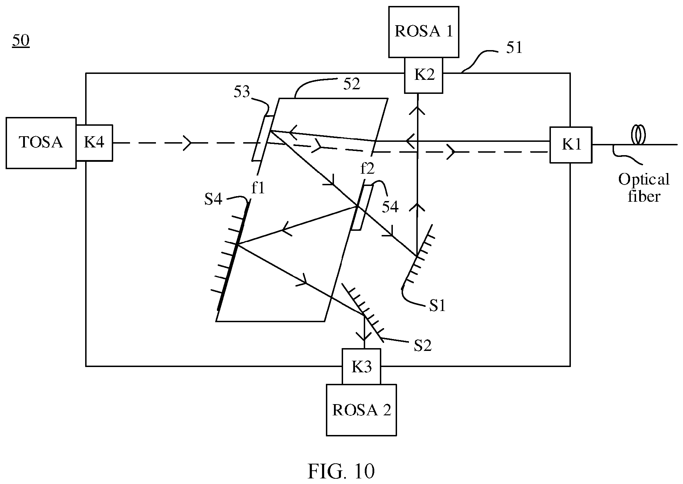

In some other embodiments, as shown in FIG. 8 or FIG. 9, a reflection structure S1 and a reflection structure S2 are further disposed in the cavity. In this case, the filter 54 is specifically configured to transparently transmit the second optical signal to the reflection structure S1, and the reflection structure S1 is configured to reflect the second optical signal to the receiving optical sub-assembly ROSA 1 of the opening K2. The reflection structure S2 is configured to reflect, to the receiving optical sub-assembly ROSA 2 of the opening K3, the seventh optical signal received by the inclined face f1. The receiving optical sub-assembly ROSA 2 is specifically configured to receive the seventh optical signal reflected by the reflection structure S2. When the reflection structure S1 and the reflection structure S2 are disposed in the cavity, disposition locations of the receiving optical sub-assembly ROSA 1 and the receiving optical sub-assembly ROSA 2 in the bidirectional optical sub-assembly 50 may be changed. For example, both the receiving optical sub-assembly ROSA 1 and the receiving optical sub-assembly ROSA 2 may be disposed at a first end of the inclined face f2 (or the inclined face f1). Based on a placement location of the bidirectional optical sub-assembly 50 shown in FIG. 8 or FIG. 9, the first end may be a lower end of the inclined face f2 (or the inclined face f1). For another example, both the receiving optical sub-assembly ROSA 1 and the receiving optical sub-assembly ROSA 2 may be disposed at a second end of the inclined face f2 (or the inclined face f1). Based on a placement location of the bidirectional optical sub-assembly 50 shown in FIG. 8 or FIG. 9, the second end may be an upper end of the inclined face f2 (or the inclined face f1). For still another example, the receiving optical sub-assembly ROSA 1 may be disposed at a first end of the inclined face f2 (or the inclined face f1), and the receiving optical sub-assembly ROSA 2 may be disposed at a second end of the inclined face f2 (or the inclined face f1); or the receiving optical sub-assembly ROSA 1 is disposed at a second end of the inclined face f2 (or the inclined face f1), and the receiving optical sub-assembly ROSA 2 is disposed at a first end of the inclined face f2 (or the inclined face f1). Disposition locations of the receiving optical sub-assembly ROSA 1 and the receiving optical sub-assembly ROSA 2 are not limited in embodiments of this application. The receiving optical sub-assembly ROSA 1 shown in FIG. 8 is disposed at the second end of the inclined face f2 (or the inclined face f1), and the receiving optical sub-assembly ROSA 2 is disposed at the first end of the inclined face f2 (or the inclined face f1). The receiving optical sub-assembly ROSA 1 shown in FIG. 9 is disposed at the second end of the inclined face f2 (or the inclined face f1), and the receiving optical sub-assembly ROSA 2 is disposed at the first end of the inclined face f2 (or the inclined face f1). In some other embodiments, as shown in FIG. 10, the bidirectional optical sub-assembly 50 includes a housing 51 having a cavity. An opening K1, an opening K2, an opening K3, and an opening K4 that are in communication with the cavity are disposed on the housing 51, where an optical fiber is coupled in the opening K1, a receiving optical sub-assembly ROSA 1 is coupled in the opening K2, a receiving optical sub-assembly ROSA 2 is coupled in the opening K3, and a transmitting optical sub-assembly TOSA is coupled in the opening K4. A filter 53, a filter 54, and a glass crystal 52 are disposed in the cavity, and the glass crystal 52 includes an inclined face f1 and an inclined face f2 that are disposed in parallel. A reflection structure S4 is further disposed in the cavity of the bidirectional optical sub-assembly 50 shown in FIG. 10. FIG. 10 is merely a sectional view of the bidirectional optical sub-assembly 50 along an optical transmission direction. In the bidirectional optical sub-assembly 50 shown in FIG. 10, the opening K1 is opposite to the inclined face f2, and the opening K4 is opposite to the inclined face f1.

When the bidirectional optical sub-assembly 50 shown in FIG. 10 receives an optical signal, the optical fiber is configured to transmit a first optical signal from the opening K1 to the filter 53 in the cavity; the filter 53 is configured to reflect the first optical signal to the inclined face f1 of the glass crystal 52; the glass crystal 52 is configured to transmit, to the inclined face f2, the first optical signal received by the inclined face f1; and the filter 54 is configured to transparently transmit, to the receiving optical sub-assembly ROSA 1 of the opening K2, a second optical signal that is in a first wavelength range and that is in the first optical signal received by the inclined face f2. The filter 54 is further configured to reflect, to the inclined face f1, a third optical signal that is in a second wavelength range and that is in the first optical signal received by the inclined face f2. The reflection structure S4 is configured to reflect, to the inclined face f2, the third optical signal received by the inclined face f1. The receiving optical sub-assembly ROSA 2 is configured to receive the third optical signal output by the inclined face f2. For example, because the reflection structure S4 reflects, to the inclined face f2, the third optical signal received by the inclined face f1, it can be learned that the reflection structure S4 is attached to the inclined face f1 of the glass crystal 52. For example, a reflective film is coated on the inclined face f1 of the glass crystal 52 to form the reflection structure S4. An attachment location of the reflection structure S4 needs to satisfy reflecting the third optical signal, and the reflection structure S4 covers a part of the inclined face f1 of the glass crystal 52.

When the bidirectional optical sub-assembly 50 shown in FIG. 10 outputs an optical signal, the transmitting optical sub-assembly TOSAis configured to transmit a fourth optical signal from the opening K4 to the filter 53 in the cavity, and the filter 53 is further configured to transparently transmit the fourth optical signal to the optical fiber of the opening K1, so that the optical fiber outputs the fourth optical signal.

As shown in FIG. 10, the filter 53 may also be attached to the inclined face of the glass crystal 52. For example, the filter 53 is attached to the inclined face f1 of the glass crystal 52. In this case, the optical fiber is specifically configured to transmit the first optical signal from the opening K1 to the inclined face f2 of the glass crystal 52 in the cavity; and the glass crystal 52 is configured to transmit, to the filter 53 through the inclined face f1, the first optical signal received by the inclined face f2, so that the filter 53 reflects the first optical signal to the inclined face f1 of the glass crystal 52. The filter 53 is specifically configured to transparently transmit the fourth optical signal to the inclined face f1 of the glass crystal 52; and the glass crystal 52 is further configured to transmit, to the optical fiber of the opening K1 through the inclined face f2, the fourth optical signal received by the inclined face f1, so that the optical fiber outputs the fourth optical signal.

In this case, the filter 53 and the reflection structure S4 are attached to the inclined face f1 of the glass crystal 52, and attachment locations of the filter 53 and the reflection structure S4 are different. For example, the filter 53 is attached to a first location of the inclined face f1 of the glass crystal 52, the reflection structure S4 is attached to a second location of the inclined face f1 of the glass crystal 52, and the attachment locations of the filter 53 and the reflection structure S4 need to ensure that an optical signal is transmitted in the bidirectional optical sub-assembly 50.

Specifically, a wavelength range of an optical signal that can be transparently transmitted by the filter 53 in the bidirectional optical sub-assembly 50 shown in FIG. 10 is a wavelength range of the fourth optical signal, a wavelength range of an optical signal that can be reflected by the filter 53 is a wavelength range of the first optical signal, a wavelength range of an optical signal that can be transparently transmitted by the filter 54 is the first wavelength range, and a wavelength range of an optical signal that can be reflected by the filter 54 is the second wavelength range.

In some other embodiments, as shown in FIG. 10, a reflection structure S1 and a reflection structure S2 are further disposed in the cavity. In this case, the filter 54 is specifically configured to transparently transmit the second optical signal to the reflection structure S1, and the reflection structure S1 is configured to reflect the second optical signal to the receiving optical sub-assembly ROSA 1 of the opening K2. The reflection structure S2 is configured to reflect, to the receiving optical sub-assembly ROSA 2 of the opening K3, the third optical signal received by the inclined face f2. The receiving optical sub-assembly ROSA 2 is specifically configured to receive the third optical signal reflected by the reflection structure S2. When the reflection structure S1 and the reflection structure S2 are disposed in the cavity, disposition locations of the receiving optical sub-assembly ROSA 1 and the receiving optical sub-assembly ROSA 2 in the bidirectional optical sub-assembly 50 may be changed. For example, both the receiving optical sub-assembly ROSA 1 and the receiving optical sub-assembly ROSA 2 may be disposed at a first end of the inclined face f2 (or the inclined face f1). Based on a placement location of the bidirectional optical sub-assembly 50 shown in FIG. 10, the first end may be a lower end of the inclined face f2 (or the inclined face f1). For another example, both the receiving optical sub-assembly ROSA 1 and the receiving optical sub-assembly ROSA 2 may be disposed at a second end of the inclined face f2 (or the inclined face f1). Based on a placement location of the bidirectional optical sub-assembly 50 shown in FIG. 10, the second end may be an upper end of the inclined face f2 (or the inclined face f1). For still another example, the receiving optical sub-assembly ROSA 1 may be disposed at a first end of the inclined face f2 (or the inclined face f1), and the receiving optical sub-assembly ROSA 2 may be disposed at a second end of the inclined face f2 (or the inclined face f1); or the receiving optical sub-assembly ROSA 1 is disposed at a second end of the inclined face f2 (or the inclined face f1), and the receiving optical sub-assembly ROSA 2 is disposed at a first end of the inclined face f2 (or the inclined face f1). Disposition locations of the receiving optical sub-assembly ROSA 1 and the receiving optical sub-assembly ROSA 2 are not limited in embodiments of this application. The receiving optical sub-assembly ROSA 1 shown in FIG. 10 is disposed at the second end of the inclined face f2 (or the inclined face f1), and the receiving optical sub-assembly ROSA 2 is disposed at the first end of the inclined face f2 (or the inclined face f1).

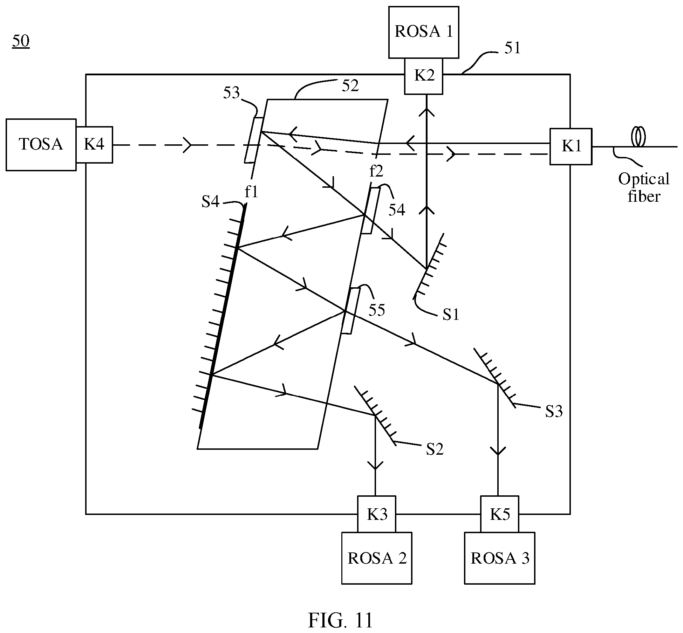

In some still other embodiments, the bidirectional optical sub-assembly 50 may respectively transmit optical signals in three different wavelength ranges to corresponding receiving optical sub-assemblies ROSAs. Refer to FIG. 11. Based on the bidirectional optical sub-assembly 50 shown in FIG. 10, in the bidirectional optical sub-assembly 50 shown in FIG. 11, an opening K5 is further disposed on the housing 51, a receiving optical sub-assembly ROSA 3 is coupled in the opening K5, and a filter 55 is further disposed in the cavity. A process in which the bidirectional optical sub-assembly 50 shown in FIG. 11 outputs a fourth optical signal is consistent with a process in which the bidirectional optical sub-assembly 50 shown in FIG. 10 outputs the fourth optical signal, and details are not described herein again.

When the bidirectional optical sub-assembly shown in FIG. 11 receives an optical signal, the optical fiber is configured to transmit a first optical signal from the opening K1 to the filter 53 in the cavity; the filter 53 is configured to reflect the first optical signal to the inclined face f1 of the glass crystal 52; the glass crystal 52 is configured to transmit, to the inclined face f2, the first optical signal received by the inclined face f1; and the filter 54 is configured to transparently transmit, to the receiving optical sub-assembly ROSA 1 of the opening K2, a second optical signal that is in a first wavelength range and that is in the first optical signal received by the inclined face f2. The filter 54 is further configured to reflect, to the inclined face f1, a third optical signal that is in a second wavelength range and that is in the first optical signal received by the inclined face f2. The reflection structure S4 is configured to reflect, to the inclined face f2, the third optical signal received by the inclined face f1. The filter 55 is configured to transparently transmit, to the receiving optical sub-assembly ROSA 3 of the opening K5, a fifth optical signal that is in a third wavelength range and that is in the third optical signal received by the inclined face f2. The filter 55 is further configured to reflect, to the inclined face f1, a sixth optical signal that is in a fourth wavelength range and that is in the third optical signal received by the inclined face f2. The reflection structure S4 is further configured to reflect, to the inclined face f2, the sixth optical signal received by the inclined face f1, and the receiving optical sub-assembly ROSA 2 is configured to receive the sixth optical signal output by the inclined face f2.

Specifically, a wavelength range of an optical signal that can be transparently transmitted by the filter 53 in the bidirectional optical sub-assembly 50 shown in FIG. 11 is a wavelength range of the fourth optical signal; a wavelength range of an optical signal that can be reflected by the filter 53 is a wavelength range of the first optical signal; a wavelength range of an optical signal that can be transparently transmitted by the filter 54 is the first wavelength range; a wavelength range of an optical signal that can be reflected by the filter 54 is the second wavelength range, where the second wavelength range includes the third wavelength range and the fourth wavelength range; a wavelength range of an optical signal that can be transparently transmitted by the filter 55 is the third wavelength range; and a wavelength range of an optical signal that can be reflected by the filter 55 is the fourth wavelength range.

In some embodiments, as shown in FIG. 11, to facilitate disposition of locations of the receiving optical sub-assembly ROSA 1, the receiving optical sub-assembly ROSA 2, and the receiving optical sub-assembly ROSA 3 in the bidirectional optical sub-assembly 50, a reflection structure S1, a reflection structure S2, and a reflection structure S3 are further disposed in the cavity, as shown in FIG. 11. In this case, the filter 54 is specifically configured to transparently transmit the second optical signal to the reflection structure S1, and the reflection structure S1 is configured to reflect the second optical signal to the receiving optical sub-assembly ROSA 1 of the opening K2. The filter 55 is specifically configured to transparently transmit the fifth optical signal to the reflection structure S3. The reflection structure S3 is configured to reflect the fifth optical signal to the receiving optical sub-assembly ROSA 3 of the opening K5. The reflection structure S2 is configured to reflect, to the receiving optical sub-assembly ROSA 2 of the opening K3, the sixth optical signal received by the inclined face f2. The receiving optical sub-assembly ROSA 2 is specifically configured to receive the sixth optical signal reflected by the reflection structure S2.

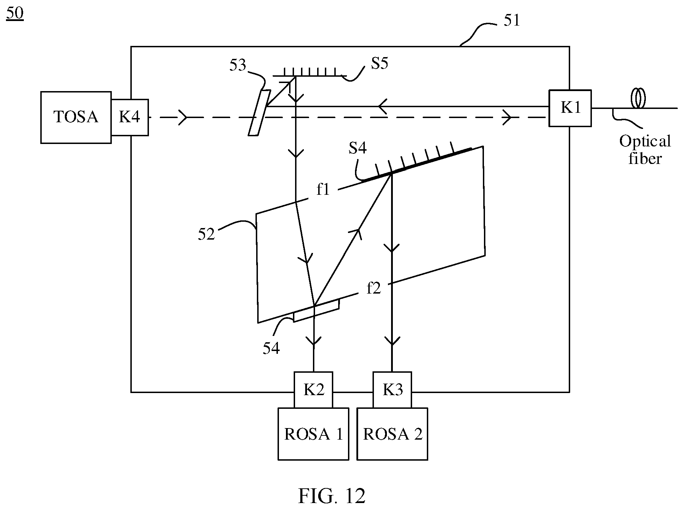

In some other embodiments, as shown in FIG. 12, the bidirectional optical sub-assembly 50 includes a housing 51 having a cavity. An opening K1, an opening K2, an opening K3, and an opening K4 that are in communication with the cavity are disposed on the housing 51, where an optical fiber is coupled in the opening K1, a receiving optical sub-assembly ROSA 1 is coupled in the opening K2, a receiving optical sub-assembly ROSA 2 is coupled in the opening K3, and a transmitting optical sub-assembly TOSA is coupled in the opening K4. A filter 53, a filter 54, and a glass crystal 52 are disposed in the cavity, and the glass crystal 52 includes an inclined face f1 and an inclined face f2 that are disposed in parallel. A reflection structure S4 is further disposed in the cavity of the bidirectional optical sub-assembly 50 shown in FIG. 12. FIG. 12 is merely a sectional view of the bidirectional optical sub-assembly 50 along an optical transmission direction. In the bidirectional optical sub-assembly 50 shown in FIG. 12, the opening K1 is disposed at a first end of the inclined face f1 (or the inclined face f2), and the opening K4 is disposed at a second end of the inclined face f1 (or the inclined face f2). For example, based on a placement location shown in FIG. 12, the first end of the inclined face f1 (or the inclined face f2) is a right end of the inclined face f1 (or the inclined face f2), and the second end of the inclined face f1 (or the inclined face f2) is a left end of the inclined face f1 (or the inclined face f2).

When the bidirectional optical sub-assembly 50 shown in FIG. 12 receives an optical signal, the optical fiber is configured to transmit a first optical signal from the opening K1 to the filter 53 in the cavity; the filter 53 is configured to reflect the first optical signal to the inclined face f1 of the glass crystal 52; the glass crystal 52 is configured to transmit, to the inclined face f2, the first optical signal received by the inclined face f1; and the filter 54 is configured to transparently transmit, to the receiving optical sub-assembly ROSA 1 of the opening K2, a second optical signal that is in a first wavelength range and that is in the first optical signal received by the inclined face f2. The filter 54 is further configured to reflect, to the inclined face f1, a third optical signal that is in a second wavelength range and that is in the first optical signal received by the inclined face f2. The reflection structure S4 is configured to reflect, to the inclined face f2, the third optical signal received by the inclined face f1. The receiving optical sub-assembly ROSA 2 is configured to receive the third optical signal output by the inclined face f2. For example, because the reflection structure S4 reflects, to the inclined face f2, the third optical signal received by the inclined face f1, it can be learned that the reflection structure S4 is attached to the inclined face f1 of the glass crystal 52. For example, a reflective film is coated on the inclined face f1 of the glass crystal 52 to form the reflection structure S4. An attachment location of the reflection structure S4 needs to satisfy reflecting the third optical signal, and the reflection structure S4 covers a part of the inclined face f1 of the glass crystal 52.

When the bidirectional optical sub-assembly 50 shown in FIG. 11 outputs an optical signal, the transmitting optical sub-assembly TOSAis configured to transmit a fourth optical signal from the opening K4 to the filter 53 in the cavity, and the filter 53 is further configured to transparently transmit the fourth optical signal to the optical fiber of the opening K1, so that the optical fiber outputs the fourth optical signal.

As shown in FIG. 12, the filter 53 is not attached to the inclined face of the glass crystal 52. An inclined face may be disposed in the cavity, and the filter 53 is attached to the inclined face. In addition, in the bidirectional optical sub-assembly 50 shown in FIG. 12, a reflection structure S5 is further disposed in the cavity. The filter 53 is specifically configured to reflect the first optical signal to the reflection structure S5. The reflection structure S5 is configured to reflect the first optical signal to the inclined face f1 of the glass crystal 52. For example, a seventh bracket may be disposed on the inclined face f1 of the glass crystal 52, the reflection structure S5 is mounted on the seventh bracket, and the reflection structure S5 and the glass crystal 52 are integrated together; or an eighth bracket is disposed in the cavity, the reflection structure S5 is mounted on the eighth bracket, and the reflection structure S5 and the glass crystal 52 are not integrated together. Whether the reflection structure S5 and the glass crystal 52 are integrated together is not limited in embodiments of this application. For example, the reflection structure S5 may be a reflective film, a reflective surface, or a reflective mirror. This is not limited in embodiments of this application.

Specifically, a wavelength range of an optical signal that can be transparently transmitted by the filter 53 in the bidirectional optical sub-assembly 50 shown in FIG. 12 is a wavelength range of the fourth optical signal, a wavelength range of an optical signal that can be reflected by the filter 53 is a wavelength range of the first optical signal, a wavelength range of an optical signal that can be transparently transmitted by the filter 54 is the first wavelength range, and a wavelength range of an optical signal that can be reflected by the filter 54 is the second wavelength range.

Refer to FIG. 12. When both the opening K2 and the opening K3 are opposite to the inclined face f2, locations of the filter 53, the reflection structure S5, the reflection structure S4, the glass crystal 52, and the filter 54 are disposed, so that the second optical signal transparently transmitted by the filter 54 is exactly transmitted to the receiving optical sub-assembly ROSA 1, and the third optical signal reflected by the reflection structure S4 is exactly transmitted to the receiving optical sub-assembly ROSA 2 after being emitted through the inclined face f2 of the glass crystal 52. In this case, in the bidirectional optical sub-assembly shown in FIG. 12, a small quantity of reflection structures may be disposed, so that the optical fiber, the receiving optical sub-assembly, and the transmitting optical sub-assembly are located at different locations of the housing.

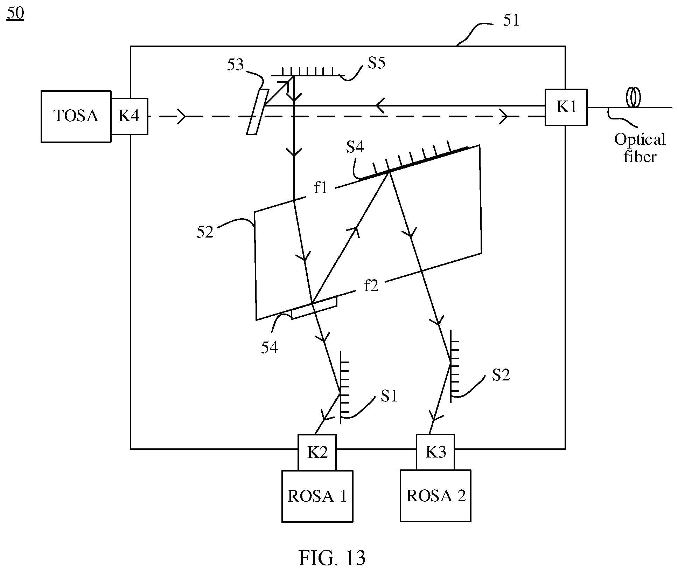

In some other embodiments, as shown in FIG. 13, a reflection structure S1 and a reflection structure S2 are further disposed in the cavity. In this case, the filter 54 is specifically configured to transparently transmit the second optical signal to the reflection structure S1, and the reflection structure S1 is configured to reflect the second optical signal to the receiving optical sub-assembly ROSA 1 of the opening K2. The reflection structure S2 is configured to reflect, to the receiving optical sub-assembly ROSA 2 of the opening K3, the third optical signal received by the inclined face f2. The receiving optical sub-assembly ROSA 2 is specifically configured to receive the third optical signal reflected by the reflection structure S2. When the reflection structure S1 and the reflection structure S2 are disposed in the cavity, disposition locations of the receiving optical sub-assembly ROSA 1 and the receiving optical sub-assembly ROSA 2 in the bidirectional optical sub-assembly 50 may be changed.

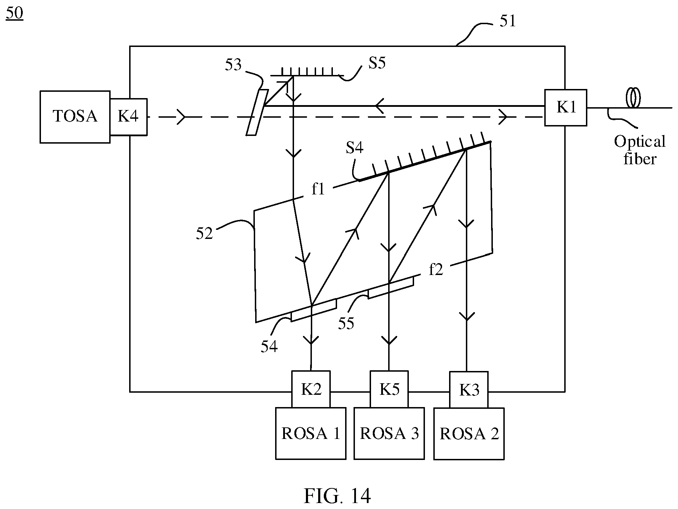

In some still other embodiments, the bidirectional optical sub-assembly 50 may respectively transmit optical signals in three different wavelength ranges to corresponding receiving optical sub-assemblies ROSAs. Refer to FIG. 14. Based on the bidirectional optical sub-assembly 50 shown in FIG. 12, in the bidirectional optical sub-assembly 50 shown in FIG. 14, an opening K5 is further disposed on the housing 51, a receiving optical sub-assembly ROSA 3 is coupled in the opening K5, and a filter 55 is further disposed in the cavity. A process in which the bidirectional optical sub-assembly 50 shown in FIG. 14 outputs a fourth optical signal is consistent with a process in which the bidirectional optical sub-assembly 50 shown in FIG. 12 outputs the fourth optical signal, and details are not described herein again.

When the bidirectional optical sub-assembly shown in FIG. 14 receives an optical signal, the optical fiber is configured to transmit a first optical signal from the opening K1 to the filter 53 in the cavity; the filter 53 is configured to reflect the first optical signal to the inclined face f1 of the glass crystal 52; the glass crystal 52 is configured to transmit, to the inclined face f2, the first optical signal received by the inclined face f1; and the filter 54 is configured to transparently transmit, to the receiving optical sub-assembly ROSA 1 of the opening K2, a second optical signal that is in a first wavelength range and that is in the first optical signal received by the inclined face f2. The filter 54 is further configured to reflect, to the inclined face f1, a third optical signal that is in a second wavelength range and that is in the first optical signal received by the inclined face f2. The reflection structure S4 is configured to reflect, to the inclined face f2, the third optical signal received by the inclined face f1. The filter 55 is configured to transparently transmit, to the receiving optical sub-assembly ROSA 3 of the opening K5, a fifth optical signal that is in a third wavelength range and that is in the third optical signal received by the inclined face f2. The filter 55 is further configured to reflect, to the inclined face f1, a sixth optical signal that is in a fourth wavelength range and that is in the third optical signal received by the inclined face f2. The reflection structure S4 is further configured to reflect, to the inclined face f2, the sixth optical signal received by the inclined face f1, and the receiving optical sub-assembly ROSA 2 is configured to receive the sixth optical signal output by the inclined face f2.

Specifically, a wavelength range of an optical signal that can be transparently transmitted by the filter 53 in the bidirectional optical sub-assembly 50 shown in FIG. 11 is a wavelength range of the fourth optical signal; a wavelength range of an optical signal that can be reflected by the filter 53 is a wavelength range of the first optical signal; a wavelength range of an optical signal that can be transparently transmitted by the filter 54 is the first wavelength range; a wavelength range of an optical signal that can be reflected by the filter 54 is the second wavelength range, where the second wavelength range includes the third wavelength range and the fourth wavelength range; a wavelength range of an optical signal that can be transparently transmitted by the filter 55 is the third wavelength range; and a wavelength range of an optical signal that can be reflected by the filter 55 is the fourth wavelength range.

Refer to FIG. 14. When the opening K2, the opening K3, and the opening K5 are all opposite to the inclined face f2, locations of the filter 53, the reflection structure S5, the reflection structure S4, the glass crystal 52, the filter 54, and the filter 55 are disposed, so that the second optical signal transparently transmitted by the filter 54 is exactly transmitted to the receiving optical sub-assembly ROSA 1, the fifth optical signal transparently transmitted by the filter 55 is exactly transmitted to the receiving optical sub-assembly ROSA 3, and the sixth optical signal reflected by the reflection structure S4 is exactly transmitted to the receiving optical sub-assembly ROSA 2 after being emitted through the inclined face f2 of the glass crystal 52. In this case, in the bidirectional optical sub-assembly shown in FIG. 12, a small quantity of reflection structures may be disposed, so that the optical fiber, the receiving optical sub-assembly, and the transmitting optical sub-assembly are located at different locations of the housing.

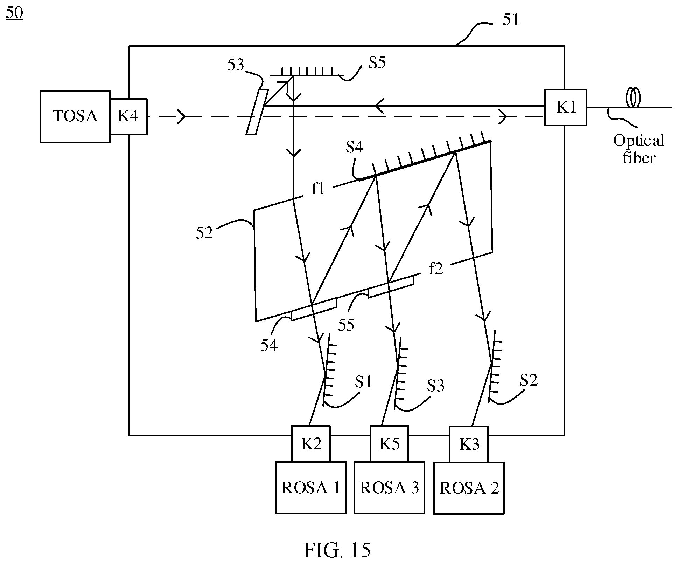

In some embodiments, as shown in FIG. 15, to facilitate disposition of locations of the receiving optical sub-assembly ROSA 1, the receiving optical sub-assembly ROSA 2, and the receiving optical sub-assembly ROSA 3 in the bidirectional optical sub-assembly 50, a reflection structure S1, a reflection structure S2, and a reflection structure S3 are further disposed in the cavity, as shown in FIG. 15. In this case, the filter 54 is specifically configured to transparently transmit the second optical signal to the reflection structure S1, and the reflection structure S1 is configured to reflect the second optical signal to the receiving optical sub-assembly ROSA 1 of the opening K2. The filter 55 is specifically configured to transparently transmit the fifth optical signal to the reflection structure S3. The reflection structure S3 is configured to reflect the fifth optical signal to the receiving optical sub-assembly ROSA 3 of the opening K5. The reflection structure S2 is configured to reflect, to the receiving optical sub-assembly ROSA 2 of the opening K3, the sixth optical signal received by the inclined face f2. The receiving optical sub-assembly ROSA 2 is specifically configured to receive the sixth optical signal reflected by the reflection structure S2.

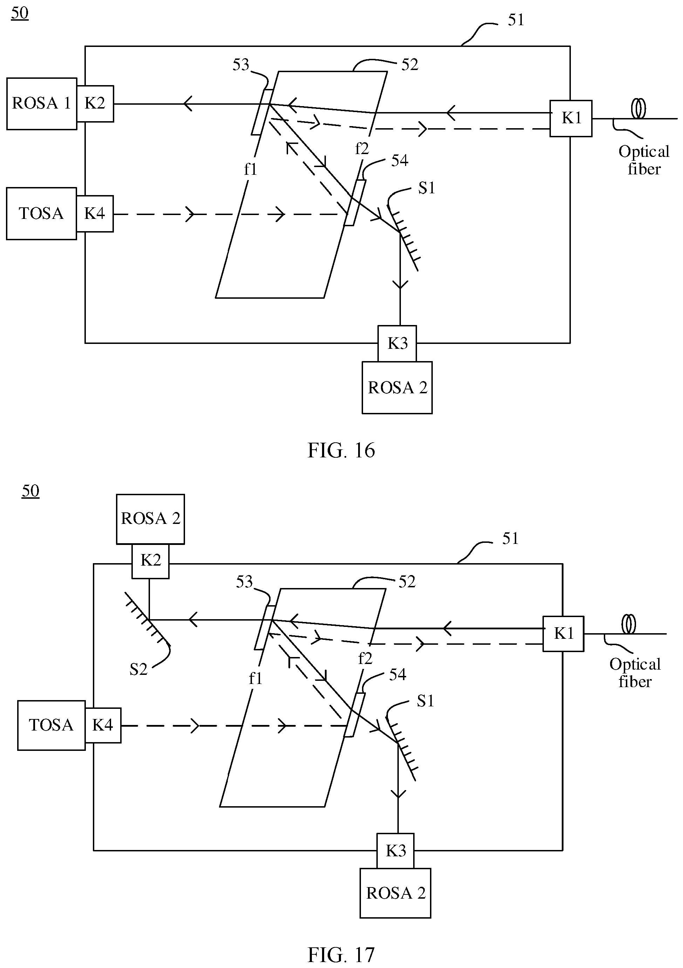

For example, an embodiment of this application provides a bidirectional optical sub-assembly. Refer to FIG. 16. The bidirectional optical sub-assembly 50 includes a housing 51 having a cavity. An opening K1, an opening K2, an opening K3, and an opening K4 that are in communication with the cavity are disposed on the housing 51, where an optical fiber is coupled in the opening K1, a receiving optical sub-assembly ROSA 1 is coupled in the opening K2, a receiving optical sub-assembly ROSA 2 is coupled in the opening K3, and a transmitting optical sub-assembly TOSA is coupled in the opening K4. A filter 53, a filter 54, and a glass crystal 52 are disposed in the cavity, and the glass crystal 52 includes an inclined face f1 and an inclined face f2 that are disposed in parallel.

When the bidirectional optical sub-assembly 50 shown in FIG. 16 receives an optical signal, the optical fiber is configured to transmit a first optical signal from the opening K1 to the inclined face f2 of the glass crystal 52 in the cavity; the glass crystal 52 is configured to transmit, to the inclined face f1, the first optical signal received by the inclined face f2; the filter 53 is configured to transparently transmit, to the receiving optical sub-assembly ROSA 1 of the opening K2, a second optical signal that is in a first wavelength range and that is in the first optical signal received by the inclined face f1; the filter 53 is further configured to reflect, to the inclined face f2, a third optical signal that is in a second wavelength range and that is in the first optical signal received by the inclined face f1; and the filter 54 is configured to transparently transmit, to the receiving optical sub-assembly ROSA 2 of the opening K3, the third optical signal received by the inclined face f2.

When the bidirectional optical sub-assembly 50 shown in FIG. 16 outputs an optical signal, the transmitting optical sub-assembly is configured to transmit a fourth optical signal from the opening K4 to the inclined face f1 of the glass crystal 52 in the cavity; the glass crystal 52 is further configured to transmit, to the inclined face f2, the fourth optical signal received by the inclined face f1; the filter 54 is further configured to reflect, to the inclined face f1, the fourth optical signal received by the inclined face f2; the filter 53 is further configured to reflect, to the inclined face f2, the fourth optical signal received by the inclined face f1; and the optical fiber is further configured to output the fourth optical signal received by the inclined face f2.

Specifically, a wavelength range of an optical signal that can be transparently transmitted by the filter 53 in the bidirectional optical sub-assembly 50 shown in FIG. 16 is the first wavelength range, a wavelength range of an optical signal that can be reflected by the filter 53 is the second wavelength range and a wavelength range of the fourth optical signal, a wavelength range of an optical signal that can be transparently transmitted by the filter 54 is the second wavelength range, and a wavelength range of an optical signal that can be reflected by the filter 54 is the wavelength range of the fourth optical signal.

In the bidirectional optical sub-assembly 50, first, the filter 53, the filter 54, and the glass crystal 52 are disposed, where the glass crystal 52 is configured to transmit, to the inclined face f1, the first optical signal received by the inclined face f2; the filter 53 is configured to transparently transmit, to the receiving optical sub-assembly ROSA 1 of the opening K2, the second optical signal that is in the first wavelength range and that is in the first optical signal received by the inclined face f1; the filter 53 is further configured to reflect, to the inclined face f2, the third optical signal that is in the second wavelength range and that is in the first optical signal received by the inclined face f1; and the filter 54 is configured to transparently transmit, to the receiving optical sub-assembly ROSA 2 of the opening K3, the third optical signal received by the inclined face f2. Therefore, the bidirectional optical sub-assembly 50 can transmit, to the receiving optical sub-assembly ROSA 1, the second optical signal that is in the first wavelength range and that is in the first optical signal, and transmit the third optical signal that is in the second wavelength range and that is in the first optical signal to the receiving optical sub-assembly ROSA 2, to implement a function of receiving two optical signals in different wavelength ranges. In addition, the bidirectional optical sub-assembly can implement, through two filters and one glass crystal, the function of receiving two optical signals in different wavelength ranges, and has a simple structure. Second, the glass crystal 52 is further configured to transmit, to the inclined face f2, the fourth optical signal received by the inclined face f1; the filter 54 is further configured to reflect, to the inclined face f1, the fourth optical signal received by the inclined face f2; the filter 53 is further configured to reflect, to the inclined face f2, the fourth optical signal received by the inclined face f1; and the optical fiber is further configured to output the fourth optical signal received by the inclined face f2. Therefore, the bidirectional optical sub-assembly 50 can also implement a function of outputting an optical signal. Third, because the filter 53 reflects, to the inclined face f2, the third optical signal that is in the second wavelength range and that is in the first optical signal received by the inclined face f1, it can be learned that the filter 53 is attached to the inclined face f1 of the glass crystal 52; and because the filter 54 is further configured to reflect, to the inclined face f1, the fourth optical signal received by the inclined face f2, it can be learned that the filter 54 is attached to the inclined face f2 of the glass crystal 52, where an inclination angle of the inclined face of the glass crystal 52 satisfies a transmission requirement of the foregoing optical signal, and precision of the inclination angle of the inclined face of the glass crystal 52 can be controlled to be very high during manufacturing of the glass crystal 52. Therefore, when the filter 53 and the filter 54 are attached to the glass crystal 52, errors of attachment angles of the filter 53 and the filter 54 are ±0.2°, and an inclined face supporting the filter 53 and an inclined face supporting the support filter 54 do not need to be manufactured and disposed in the cavity, so that manufacturing of the bidirectional optical sub-assembly 50 is simpler. Because the errors of the attachment angles at which the filter 53 and the filter 54 are attached to the glass crystal 52 are ±0.2°, when optical splitting capabilities of the filter 53 and the filter 54 are strong, the bidirectional optical sub-assembly 50 can separately transmit two optical signals with a small wavelength difference to a specific receiving optical sub-assembly. In this way, accuracy of receiving an optical signal by the bidirectional optical sub-assembly 50 is further improved.

For example, as shown in FIG. 16, the opening K1 is opposite to the inclined face f2, and the opening K2 is opposite to the inclined face f1. In this case, the second optical signal transparently transmitted by the filter 53 to the receiving optical sub-assembly ROSA 1 of the opening K2 may be exactly transmitted to the receiving optical sub-assembly ROSA 1. However, the receiving optical sub-assembly ROSA 2 in FIG. 16 is disposed at a first end of the inclined face f2 (or the inclined face f1). Based on a placement location of the bidirectional optical sub-assembly 50 shown in FIG. 16, the first end may be a lower end of the inclined face f2 (or the inclined face f1). In this case, a reflection structure S1 is further disposed in the cavity of the bidirectional optical sub-assembly 50 shown in FIG. 16. The filter 54 is specifically configured to transparently transmit the third optical signal to the reflection structure S1. The reflection structure S1 is configured to reflect the third optical signal to the receiving optical sub-assembly ROSA 2 of the opening K3.

In some embodiments, to facilitate disposition of locations of the receiving optical sub-assemblies ROSA 1 and ROSA2 in the bidirectional optical sub-assembly 50, a reflection structure S2 is further disposed in the cavity, as shown in FIG. 17. The filter 53 is specifically configured to transparently transmit the second optical signal to the reflection structure S2, and the reflection structure S2 is configured to reflect the second optical signal to the receiving optical sub-assembly ROSA 1 of the opening K2.

When the reflection structure S1 and the reflection structure S2 are disposed in the cavity, the reflection structure S2 reflects the second optical signal to the receiving optical sub-assembly ROSA 1 of the opening K2, and the reflection structure S1 reflects the third optical signal to the receiving optical sub-assembly ROSA 2 of the opening K3. In this case, disposition locations of the receiving optical sub-assembly ROSA 1 and the receiving optical sub-assembly ROSA 2 in the bidirectional optical sub-assembly may be changed. For example, both the receiving optical sub-assembly ROSA 1 and the receiving optical sub-assembly ROSA 2 may be disposed at a first end of the inclined face f2 (or the inclined face f1). Based on a placement location of the bidirectional optical sub-assembly 50 shown in FIG. 17, the first end may be a lower end of the inclined face f2 (or the inclined face f1). For another example, both the receiving optical sub-assembly ROSA 1 and the receiving optical sub-assembly ROSA 2 may be disposed at a second end of the inclined face f2 (or the inclined face f1). Based on a placement location of the bidirectional optical sub-assembly 50 shown in FIG. 17, the second end may be an upper end of the inclined face f2 (or the inclined face f1). For still another example, the receiving optical sub-assembly ROSA 1 may be disposed at a first end of the inclined face f2 (or the inclined face f1), and the receiving optical sub-assembly ROSA 2 may be disposed at a second end of the inclined face f2 (or the inclined face f1); or the receiving optical sub-assembly ROSA 1 is disposed at a second end of the inclined face f2 (or the inclined face f1), and the receiving optical sub-assembly ROSA 2 is disposed at a first end of the inclined face f2 (or the inclined face f1). Disposition locations of the receiving optical sub-assembly ROSA 1 and the receiving optical sub-assembly ROSA 2 are not limited in embodiments of this application. The receiving optical sub-assembly ROSA 1 shown in FIG. 17 is disposed at the second end of the inclined face f2 (or the inclined face f1), and the receiving optical sub-assembly ROSA 2 is disposed at the first end of the inclined face f2 (or the inclined face f1).

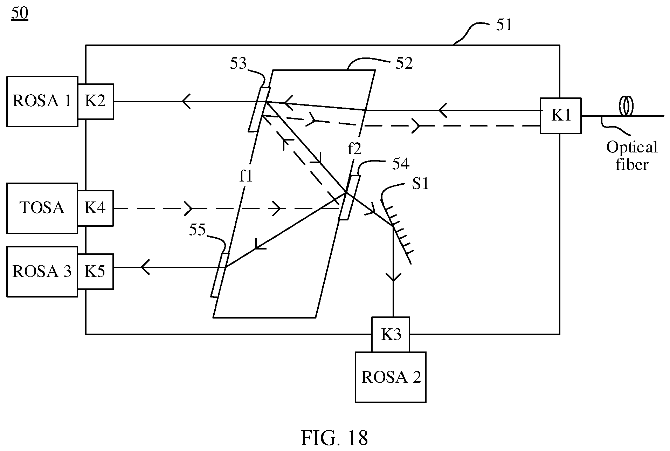

In some still other embodiments, the bidirectional optical sub-assembly 50 may respectively transmit optical signals in three different wavelength ranges to corresponding receiving optical sub-assemblies ROSAs. Refer to FIG. 18. Based on the bidirectional optical sub-assembly 50 shown in FIG. 17, in the bidirectional optical sub-assembly 50 shown in FIG. 18, an opening K5 is further disposed on the housing 51, a receiving optical sub-assembly ROSA 3 is coupled in the opening K5, and a filter 55 is further disposed in the cavity. A process in which the bidirectional optical sub-assembly 50 shown in FIG. 18 outputs a fourth optical signal is consistent with a process in which the bidirectional optical sub-assembly 50 shown in FIG. 17 outputs the fourth optical signal, and details are not described herein again.

When the bidirectional optical sub-assembly 50 shown in FIG. 18 receives an optical signal, the optical fiber is configured to transmit a first optical signal from the opening K1 to the inclined face f2 of the glass crystal 52 in the cavity; the glass crystal 52 is configured to transmit, to the inclined face f1, the first optical signal received by the inclined face f2; the filter 53 is configured to transparently transmit, to the receiving optical sub-assembly ROSA 1 of the opening K2, a second optical signal that is in a first wavelength range and that is in the first optical signal received by the inclined face f1; the filter 53 is further configured to reflect, to the inclined face f2, a third optical signal that is in a second wavelength range and that is in the first optical signal received by the inclined face f1; the filter 54 is specifically configured to transparently transmit, to the receiving optical sub-assembly ROSA 2 of the opening K3, a fifth optical signal that is in a third wavelength range and that is in the third optical signal received by the inclined face f2; the filter 54 is further configured to reflect, to the inclined face f1, a sixth optical signal that is in a fourth wavelength range and that is in the third optical signal received by the inclined face f2; and the filter 55 is configured to transparently transmit the sixth optical signal to the receiving optical sub-assembly ROSA 3 of the opening K5

Specifically, a wavelength range of an optical signal that can be transmitted by the filter 53 in the bidirectional optical sub-assembly 50 shown in FIG. 18 is the first wavelength range, a wavelength range of an optical signal that can be reflected by the filter 53 is the second wavelength range and a wavelength range of the fourth optical signal, a wavelength range of an optical signal that can be transparently transmitted by the filter 54 is the third wavelength range, a wavelength range of an optical signal that can be reflected by the filter 54 is the fourth wavelength range and the wavelength range of the fourth optical signal, a wavelength range of an optical signal that can be transparently transmitted by the filter 55 is the fourth wavelength range, and a wavelength range of an optical signal that can be reflected by the filter 55 is the wavelength range of the fourth optical signal.

For example, as shown in FIG. 18, the opening K1 is opposite to the inclined face f2, the opening K2 is opposite to the inclined face f1, and the opening K5 is opposite to the inclined face f1. In this case, the second optical signal transparently transmitted by the filter 53 to the receiving optical sub-assembly ROSA 1 of the opening K2 may be exactly transmitted to the receiving optical sub-assembly ROSA 1, and the sixth optical signal transparently transmitted by the filter 55 to the receiving optical sub-assembly ROSA 3 of the opening K5 may be exactly transmitted to the receiving optical sub-assembly ROSA 3. However, the receiving optical sub-assembly ROSA 2 in FIG. 18 is disposed at a first end of the inclined face f2 (or the inclined face f1). Based on a placement location of the bidirectional optical sub-assembly 50 shown in FIG. 18, the first end may be a lower end of the inclined face f2 (or the inclined face f1). In this case, a reflection structure S1 is further disposed in the cavity of the bidirectional optical sub-assembly 50 shown in FIG. 18. The filter 54 is specifically configured to transparently transmit the fifth optical signal to the reflection structure S1. The reflection structure S1 is configured to reflect the fifth optical signal to the receiving optical sub-assembly ROSA 2 of the opening K3.

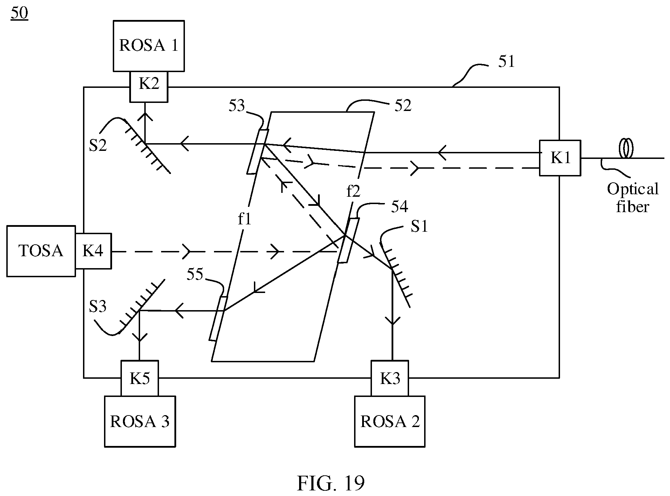

In some embodiments, as shown in FIG. 19, to facilitate disposition of locations of the receiving optical sub-assembly ROSA 1, the receiving optical sub-assembly ROSA 2, and the receiving optical sub-assembly ROSA 3 in the bidirectional optical sub-assembly 50, a reflection structure S2 and a reflection structure S3 are further disposed in the cavity, as shown in FIG. 19. The filter 53 is specifically configured to transparently transmit the second optical signal to the reflection structure S2; the reflection structure S2 is configured to reflect the second optical signal to the receiving optical sub-assembly ROSA 1 of the opening K2; the filter 55 is specifically configured to transparently transmit the sixth optical signal to the reflection structure S3; and the reflection structure S3 is configured to reflect the sixth optical signal to the receiving optical sub-assembly ROSA 3 of the opening K5.

For example, more filters may be disposed in the bidirectional optical sub-assembly 50 shown in any one of FIG. 6 to FIG. 19. This is not limited in embodiments of this application.

For example, an embodiment of this application provides an optical module. The optical module includes a printed circuit board (printed circuit board, PCB) and a bidirectional optical sub-assembly. The bidirectional optical sub-assembly may be the bidirectional optical sub-assembly 50 shown in any one of FIG. 6 to FIG. 19. The bidirectional optical sub-assembly is electrically connected to the PCB. For example, a receiving optical sub-assembly in the bidirectional optical sub-assembly may be electrically connected to the PCB. An optical-to-electrical conversion chip and an amplifier are disposed in the receiving optical sub-assembly. The optical-to-electrical conversion chip may be specifically a chip including a photo diode (photo diode, PD), a chip including a PIN diode (pin diode), or a chip including an avalanche photon diode (avalanche photon diode, APD), where the optical-to-electrical conversion chip converts a received optical signal into an electrical signal, and transmits the electrical signal to the amplifier, the amplifier amplifies the electrical signal, and transmits an amplified electrical signal to the PCB; and/or a transmitting optical sub-assembly in the bidirectional optical sub-assembly may be electrically connected to the PCB, the transmitting optical sub-assembly includes an electrical-to-optical conversion chip, and the electrical-to-optical conversion chip may be specifically a chip including a laser diode (laser diode, LD), where the electrical-to-optical conversion chip receives an electrical signal that carries to-be-sent information and that is transmitted by the PCB, converts the electrical signal into an optical signal, and further outputs the optical signal through the bidirectional optical sub-assembly.

For example, the optical module may be disposed in the OLT 11 shown in FIG. 4. In some other embodiments, the optical module may be alternatively disposed in any communication device that needs to receive a plurality of optical signals with different wavelengths. This is not limited in embodiments of this application.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A bidirectional optical sub-assembly, comprising:
a housing having a cavity, wherein
a first opening, a second opening, a third opening, and a fourth opening that are in communication with the cavity are disposed on the housing, wherein an optical fiber is coupled in the first opening, a first receiving optical sub-assembly is coupled in the second opening, a second receiving optical sub-assembly is coupled in the third opening, and a transmitting optical sub-assembly is coupled in the fourth opening; and
a first filter, a second filter, and a glass crystal are disposed in the cavity, and the glass crystal comprises a first inclined face and a second inclined face that are disposed in parallel, wherein
the optical fiber is configured to transmit a first optical signal from the first opening to the first filter in the cavity;
the first filter is configured to reflect the first optical signal to the first inclined face of the glass crystal;
the glass crystal is configured to transmit, to the second inclined face, the first optical signal received by the first inclined face;
the second filter is configured to transparently transmit, to the first receiving optical sub-assembly of the second opening, a second optical signal that is in a first wavelength range and that is in the first optical signal received by the second inclined face;
the second filter is further configured to reflect, to the first inclined face, a third optical signal that is in a second wavelength range and that is in the first optical signal received by the second inclined face;
the second receiving optical sub-assembly is configured to receive the third optical signal output by the first inclined face;
the transmitting optical sub-assembly is configured to transmit a fourth optical signal from the fourth opening to the first filter in the cavity; and
the first filter is further configured to transparently transmit the fourth optical signal to the optical fiber of the first opening.

2. The bidirectional optical sub-assembly according to claim 1, wherein
a first reflection structure and a second reflection structure are further disposed in the cavity; the second filter is specifically configured to transparently transmit the second optical signal to the first reflection structure;
the first reflection structure is configured to reflect the second optical signal to the first receiving optical sub-assembly of the second opening;
the second reflection structure is configured to reflect, to the second receiving optical sub-assembly of the third opening, the third optical signal received by the first inclined face; and
the second receiving optical sub-assembly is specifically configured to receive the third optical signal reflected by the second reflection structure.

3. The bidirectional optical sub-assembly according to claim 1, wherein
a fifth opening is further disposed on the housing, and a third receiving optical sub-assembly is coupled in the fifth opening;
a third filter is further disposed in the cavity;
the third filter is configured to transparently transmit, to the second receiving optical sub-assembly of the third opening, a fifth optical signal that is in a third wavelength range and that is in the third optical signal received by the first inclined face;
the second receiving optical sub-assembly is specifically configured to receive the fifth optical signal;
the third filter is further configured to reflect, to the second inclined face, a sixth optical signal that is in a fourth wavelength range and that is in the third optical signal received by the first inclined face; and
the third receiving optical sub-assembly is configured to receive the sixth optical signal output by the second inclined face.

4. The bidirectional optical sub-assembly according to claim 3, wherein
a first reflection structure, a second reflection structure, and a third reflection structure are further disposed in the cavity;
the second filter is specifically configured to transparently transmit the second optical signal to the first reflection structure;
the first reflection structure is configured to reflect the second optical signal to the first receiving optical sub-assembly of the second opening;
the third filter is specifically configured to transparently transmit the fifth optical signal to the second reflection structure;
the second reflection structure is configured to reflect the fifth optical signal to the second receiving optical sub-assembly of the third opening;
the third reflection structure is configured to reflect, to the third receiving optical sub-assembly of the fifth opening, the sixth optical signal received by the second inclined face; and
the third receiving optical sub-assembly is specifically configured to receive the sixth optical signal reflected by the third reflection structure.

5. The bidirectional optical sub-assembly according to claim 1, wherein
a fourth filter and a reflector plate are further disposed in the cavity;
the fourth filter is configured to reflect, to the second inclined face, a seventh optical signal that is in a fifth wavelength range and that is in the third optical signal received by the first inclined face;
the fourth filter is further configured to transparently transmit an eighth optical signal that is in a sixth wavelength range and that is in the third optical signal received by the first inclined face;
the reflector plate is configured to reflect, to the first inclined face, the seventh optical signal received by the second inclined face; and
the second receiving optical sub-assembly is configured to receive the seventh optical signal output by the first inclined face.

6. The bidirectional optical sub-assembly according to claim 1, wherein
a fourth filter and a reflector plate are further disposed in the cavity;
the reflector plate is configured to reflect, to the second inclined face, the third optical signal received by the first inclined face;
the fourth filter is configured to reflect, to the first inclined face, a seventh optical signal that is in a fifth wavelength range and that is in the third optical signal received by the second inclined face;
the fourth filter is further configured to transparently transmit an eighth optical signal that is in a sixth wavelength range and that is in the third optical signal received by the second inclined face; and
the second receiving optical sub-assembly is configured to receive the seventh optical signal output by the first inclined face.

7. The bidirectional optical sub-assembly according to claim 5 or 6, wherein
a first reflection structure and a second reflection structure are further disposed in the cavity; the second filter is specifically configured to transparently transmit the second optical signal to the first reflection structure;
the first reflection structure is configured to reflect the second optical signal to the first receiving optical sub-assembly of the second opening;
the second reflection structure is configured to reflect, to the second receiving optical sub-assembly of the third opening, the seventh optical signal received by the first inclined face; and
the second receiving optical sub-assembly is specifically configured to receive the seventh optical signal reflected by the second reflection structure.

8. The bidirectional optical sub-assembly according to claim 1, wherein
a fourth reflection structure is further disposed in the cavity;
the fourth reflection structure is configured to reflect, to the second inclined face, the third optical signal received by the first inclined face; and
the second receiving optical sub-assembly is specifically configured to receive the third optical signal output by the second inclined face.

9. The bidirectional optical sub-assembly according to claim 8, wherein
a first reflection structure and a second reflection structure are further disposed in the cavity; the second filter is specifically configured to transparently transmit the second optical signal to the first reflection structure;
the first reflection structure is configured to reflect the second optical signal to the first receiving optical sub-assembly of the second opening;
the second reflection structure is configured to reflect, to the second receiving optical sub-assembly of the third opening, the third optical signal received by the second inclined face; and
the second receiving optical sub-assembly is specifically configured to receive the third optical signal reflected by the second reflection structure.

10. The bidirectional optical sub-assembly according to claim 8, wherein
a fifth opening is further disposed on the housing, and a third receiving optical sub-assembly is coupled in the fifth opening;
a third filter is further disposed in the cavity;
the third filter is configured to transparently transmit, to the third receiving optical sub-assembly of the fifth opening, a fifth optical signal that is in a third wavelength range and that is in the third optical signal received by the second inclined face;
the third filter is further configured to reflect, to the first inclined face, a sixth optical signal that is in a fourth wavelength range and that is in the third optical signal received by the second inclined face;
the fourth reflection structure is further configured to reflect, to the second inclined face, the sixth optical signal received by the first inclined face; and
the second receiving optical sub-assembly is specifically configured to receive the sixth optical signal output by the second inclined face.

11. The bidirectional optical sub-assembly according to claim 10, wherein
a first reflection structure, a second reflection structure, and a third reflection structure are further disposed in the cavity;
the second filter is specifically configured to transparently transmit the second optical signal to the first reflection structure;
the first reflection structure is configured to reflect the second optical signal to the first receiving optical sub-assembly of the second opening;
the third filter is specifically configured to transparently transmit the fifth optical signal to the third reflection structure;
the third reflection structure is configured to reflect the fifth optical signal to the third receiving optical sub-assembly of the fifth opening;
the second reflection structure is configured to reflect, to the second receiving optical sub-assembly of the third opening, the sixth optical signal received by the second inclined face; and
the second receiving optical sub-assembly is specifically configured to receive the sixth optical signal reflected by the second reflection structure.

12. The bidirectional optical sub-assembly according to any one of claims 1 to 4, wherein the optical fiber is specifically configured to transmit the first optical signal from the first opening to the second inclined face of the glass crystal in the cavity;
the glass crystal is configured to transmit, to the first filter through the first inclined face, the first optical signal received by the second inclined face;
the first filter is specifically configured to transparently transmit the fourth optical signal to the first inclined face of the glass crystal; and
the glass crystal is further configured to transmit, to the optical fiber of the first opening through the second inclined face, the fourth optical signal received by the first inclined face.

13. The bidirectional optical sub-assembly according to any one of claims 8 to 11, wherein a fifth reflection structure is further disposed in the cavity;
the first filter is specifically configured to reflect the first optical signal to the fifth reflection structure; and
the fifth reflection structure is configured to reflect the first optical signal to the first inclined face of the glass crystal.

14. A bidirectional optical sub-assembly, comprising:
a housing having a cavity, wherein
a first opening, a second opening, a third opening, and a fourth opening that are in communication with the cavity are disposed on the housing, wherein an optical fiber is coupled in the first opening, a first receiving optical sub-assembly is coupled in the second opening, a second receiving optical sub-assembly is coupled in the third opening, and a transmitting optical sub-assembly is coupled in the fourth opening; and
a first filter, a second filter, and a glass crystal are disposed in the cavity, and the glass crystal comprises a first inclined face and a second inclined face that are disposed in parallel, wherein
the optical fiber is configured to transmit a first optical signal from the first opening to the second inclined face of the glass crystal in the cavity;
the glass crystal is configured to transmit, to the first inclined face, the first optical signal received by the second inclined face;
the first filter is configured to transparently transmit, to the first receiving optical sub-assembly of the second opening, a second optical signal that is in a first wavelength range and that is in the first optical signal received by the first inclined face;
the first filter is further configured to reflect, to the second inclined face, a third optical signal that is in a second wavelength range and that is in the first optical signal received by the first inclined face;
the second filter is configured to transparently transmit, to the second receiving optical sub-assembly of the third opening, the third optical signal received by the second inclined face;
the transmitting optical sub-assembly is configured to transmit a fourth optical signal from the fourth opening to the first inclined face of the glass crystal in the cavity;
the glass crystal is further configured to transmit, to the second inclined face, the fourth optical signal received by the first inclined face;
the second filter is further configured to reflect, to the first inclined face, the fourth optical signal received by the second inclined face;
the first filter is further configured to reflect, to the second inclined face, the fourth optical signal received by the first inclined face; and
the optical fiber is further configured to output the fourth optical signal received by the second inclined face.

15. The bidirectional optical sub-assembly according to claim 14, wherein
a first reflection structure is further disposed in the cavity;
the second filter is specifically configured to transparently transmit the third optical signal to the first reflection structure; and
the first reflection structure is configured to reflect the third optical signal to the second receiving optical sub-assembly of the third opening.

16. The bidirectional optical sub-assembly according to claim 14 or 15, wherein
a second reflection structure is further disposed in the cavity;
the first filter is specifically configured to transparently transmit the second optical signal to the second reflection structure; and
the second reflection structure is configured to reflect the second optical signal to the first receiving optical sub-assembly of the second opening.

17. The bidirectional optical sub-assembly according to claim 14, wherein
a fifth opening is further disposed on the housing, and a third receiving optical sub-assembly is coupled in the fifth opening;
a third filter is further disposed in the cavity;
the second filter is specifically configured to transparently transmit, to the second receiving optical sub-assembly of the third opening, a fifth optical signal that is in a third wavelength range and that is in the third optical signal received by the second inclined face;
the second filter is further configured to reflect, to the first inclined face, a sixth optical signal that is in a fourth wavelength range and that is in the third optical signal received by the second inclined face; and
the third filter is configured to transparently transmit the sixth optical signal to the third receiving optical sub-assembly of the fifth opening.

18. The bidirectional optical sub-assembly according to claim 17, wherein
a first reflection structure is further disposed in the cavity;
the second filter is specifically configured to transparently transmit the fifth optical signal to the first reflection structure; and
the first reflection structure is configured to reflect the fifth optical signal to the second receiving optical sub-assembly of the third opening.

19. The bidirectional optical sub-assembly according to claim 17 or 18, wherein
a second reflection structure and a third reflection structure are further disposed in the cavity; the first filter is specifically configured to transparently transmit the second optical signal to the second reflection structure;
the second reflection structure is configured to reflect the second optical signal to the first receiving optical sub-assembly of the second opening;
the third filter is specifically configured to transparently transmit the sixth optical signal to the third reflection structure; and
the third reflection structure is configured to reflect the sixth optical signal to the third receiving optical sub-assembly of the fifth opening.

20. An optical module, wherein the optical module comprises the bidirectional optical sub-assembly according to any one of claims 1 to 19 and a printed circuit board, and the bidirectional optical sub-assembly is electrically connected to the printed circuit board.
